# EUROPÄISCHE PATENTSCHRIFT

(11) **EP 2 137 027 B1**
(45) Veröffentlichungstag und Bekanntmachung des Hinweises auf die Patenterteilung: **08.06.2016**
(21) Anmeldenummer: 08733236.7
(22) Anmeldetag: 11.04.2008
(51) Int. Cl.: B60N 2/48, B60N 2/70, B60N 2/02, B60N 2/24, B61D 33/00, B64D 11/06

(54) **SITZ, INSBESONDERE FÜR ÖFFENTLICHE VERKEHRSMITTEL**
SEAT, PARTICULARLY FOR PUBLIC TRANSPORTATION
SIÈGE, NOTAMMENT POUR MOYENS DE TRANSPORTS PUBLICS

(30) Priorität: 13.04.2007 AT 5782007; 01.04.2008 AT 5072008
(43) Veröffentlichungstag der Anmeldung: 30.12.2009
(73) Patentinhaber: Greiner Aerospace GmbH, 4550 Kremsmünster (AT); Kobleder Holding GmbH, 4973 St. Martin im Innkreis (AT); Ludeke Design, 8307 Zürich (CH)
(72) Erfinder: MÖSENEDER, Johann, 4609 Thalheim/Wels (AT); STOLLBERGER, Franz, 4973 St. Martin i.I (AT); LUDEKE, Christine, 8005 Zürich (CH)
(74) Vertreter: Ofner, Clemens
(86) Internationale Anmeldenummer: PCT/AT2008/000133
(87) Internationale Veröffentlichungsnummer: WO 2008/124859

(56) Entgegenhaltungen:
- WO-A-2008/023228
- US-A- 2 644 508

## Beschreibung

Die Erfindung bezieht sich auf einen Sitz, insbesondere in öffentlichen Verkehrsmitteln, mit einem Traggestell und einer damit verbundenen Stützeinheit, welche einen Grundrahmen sowie eine daran gehalterte elastische Bespannung aus einem freitragenden Gestrick umfasst, wie dies im Anspruch 1 beschrieben ist.

Aus der WO 99/43239 A1 bzw. der daraus hervor gegangenen EP 1 056 371 B1 ist eine Bespannung für ein Liegebett bekannt geworden, welches einen umlaufenden Stütz- bzw. Tragrahmen zur Aufnahme und Abstützung der Bespannung aufweist. Die Bespannung ist ihrerseits aus einer textilen Struktur aus einem aus Kunststofffäden hergestellten Gestrick oder Gewebe gebildet. Dieses Gestrick ist unter unterschiedlicher Vorspannung an den Längsholmen des Tragrahmens gehaltert, wobei in Längsrichtung der Längsholme gesehen Abschnitte mit unterschiedlicher Vorspannung vorgesehen sind. Durch die unterschiedlich gewählte Vorspannung der textilen Struktur werden in Längserstreckung Zonen mit unterschiedlicher Elastizität geschaffen. Bei dem hier gezeigten Liegebett ist im Bereich der höchsten Lasteinbringung, nämlich im Bereich des Gesäßes, die Vorspannung am höchsten gewählt, wodurch sich die geringere Elastizität und damit ein geringeres Einsinken ergeben.

Die US 4,230,365 A beschreibt ein Möbelstück aus einem selbsttragenden Rahmen und einem durchlaufenden, die Rahmenteile umhüllenden Textilüberzug. Das textile Überzugsmaterial ist aus einem gestrickten Material mit elastischen Eigenschaften ausgebildet. Die seitlichen Rahmenteile sind über Querstreben miteinander verbunden, wobei zwischen dem Textilüberzug und den Querstreben eine zusätzliche Schaumauflage zur Abstützung angeordnet ist. Die textile Umhüllung dient rein zur Abdeckung der Rahmenteile und weist keine selbsttragende Funktion sowie Zonen unterschiedlicher Verformbarkeit für die Abstützung des Benutzers auf.

Aus der US 3,999,802 A ist ein Sessel aus einem Rohrrahmengestell bekannt geworden, welcher in seinem Sitz- und Rückenbereich von einem Überzugsmaterial umgeben ist. Dieses ist in Form eines textilen Schlauches über den Rohrrahmen gezogen. Im Übergangsbereich zwischen dem Sitz- und Rückenteil sind Querstreben vorgesehen. Zur leichteren Montage weist das sackförmig ausgebildete Überzugsmaterial in dem dem Kniebereich zugewendeten Ende eine Öffnung auf, um so über das Rahmengestell gezogen und daran montiert zu werden. Der textile Überzug weist keine Zonen unterschiedlicher Verformbarkeit für die Abstützung des Benutzers auf.

Aus der US 2,865,436 A1 ist ein Sitz aus einem Rahmengestell sowie einem Überzugsmaterial bekannt geworden, bei welchem das zum Sitzen vorgesehene Überzugsmaterial mittels elastischer Spannelemente seitlich an den Rahmenteilen gehalten ist. Die elastischen Eigenschaften des Bezugsmaterials werden nur durch die im Bereich der beiden Längsseiten angeordneten elastischen Zugelemente realisiert, um so eine gewisse Nachgiebigkeit zu erzielen.

Die US 3,600,035 A beschreibt ein Überzugsmaterial für einen Sitzteil aus einem Rahmengestell, wobei das Rahmengestell im Übergangsbereich zwischen dem Sitz und der Rückenlehne ein zwischen den seitlichen Rahmenteilen quer verlaufendes Strebenelement aufweist. Das Überzugsmaterial weist einen festen, nahezu unnachgiebigen Tragkörper auf, um das Gewicht der darauf Platz nehmenden Person an das Rahmengestell übertragen zu können. Zwischen den Deckschichten des Überzugsmaterials ist ein zusätzlicher Schaumteil angeordnet, um den Sitzkomfort noch zu verbessern. Der Überzug bzw. die Bespannung weist keine Zonen unterschiedlicher Verformbarkeit für die Abstützung des Benutzers auf.

Die DE 202 16 302 U1 beschreibt einen Bürostuhl mit einer neigbaren Rückenlehne, welche eine elastische Bespannung aufweist. Die Rückenlehne umfasst einen Lehnenrahmen, an welchem die Bespannung befestigt ist. Diese Bespannung ist als schlauchförmiges Gestrick ausgebildet, wobei das Zentrum zur Abstützung des Rückens eine höhere Elastizität aufweist als die diesen umgebenden Randzonen. Dadurch wird es für den Benutzer möglich, im Zentrumsbereich der Bespannung in der zurückgelehnten Haltung die Rückenpartie tiefer in das Gestrick hinein zu verformen, als dies in den Randzonen möglich ist. Der Sitz besteht aus einem Sitzträger, auf dem der Sitzpolster gelagert wird. Der Sitz und die Rückenlehne stellen jeweils eigene, jedoch miteinander verbundene Bauteile dar.

Aus der DE 34 03 967 A1 ist ein Fahrzeugsitz mit einem eigenen Sitzflächenteil sowie Rückenlehnenteil bekannt geworden, bei dem sowohl der Sitzflächenteil als auch der Rückenlehnenteil Zonen verschiedener Nachgiebigkeit aufweist. Die Zonen der verschiedenen Nachgiebigkeit sind bei beiden Sitzteilen in Bahnen unterteilt. Der Sitzbereich weist in seinem Zentrum eine hohe Nachgiebigkeit und damit höhere Elastizität als die beiden unmittelbar daran anschließenden vorderen und hinteren Zonen auf. Der gesamte Sitz wird seitlich sowie an seiner Rückseite von einer U-förmigen Außenzone umgeben, welche im Vergleich zu den übrigen Zonen die geringste Nachgiebigkeit und somit die höchste Festigkeit aufweist. Auch der Rückenbereich weist eine diesen außen umgebende, in etwa U-förmig ausgebildete Randzone mit der geringsten Nachgiebigkeit und somit höchsten Festigkeit auf. Der Rückenbereich selbst ist in Zonen mit unterschiedlicher, jedoch höherer Nachgiebigkeit bezüglich der Außenzone ausgebildet. Die Zonen unterschiedlicher Festigkeit sind aus mit Polstermaterial gefüllten, dicht nebeneinander angeordneten Kammern oder Schläuchen gebildet.

Aus der US 4,522,447 A sind Sitz- und Rückenpolster aus einem Schaummaterial bekannt geworden, wobei beim Sitzpolster im Bereich der unmittelbaren Abstützung des Sitzbereiches dieser die höchste Elastizität aufweist. Diese Zentralzone wird von einem Schaummaterial mit einem höheren Elastizitätsmodul umgeben und weist dieses somit eine höhere Festigkeit auf.

Aus der dem Oberbegriff entsprechenden US 2,644,508 A ist ein Stuhl bekannt geworden, dessen Sitz- und Rückenteil seitlich verlaufende Trag- bzw. Stützelemente aufweist, welche ihrerseits an durch jeweils Füße und ein Lehnenelement aufweisenden U-förmigen Teilen gehaltert sind. Zwischen den seitlichen Stütz- bzw. Tragelementen sind vorgespannte Federelemente sowie Querstreben angeordnet, wobei die quer verlaufenden Federelemente zur Abstützung der durchlaufend ausgebildeten Auflage dienen. Zwischen den die Auflage bildenden Schichten ist ein zusätzliches Füll- bzw. Polstermaterial in dem den Sitz bzw. die Rückenlehne bildenden Abschnitten eingebracht. Die größte Nachgiebigkeit wird durch die quer verlaufenden Federelemente durch Lastabtragung ausgehend von der durchlaufenden Auflage auf diese erzielt. Um einen Längenausgleich während der Benutzung der durchlaufenden Auflage zu erzielen, sind die beiden an der Unterseite des Sitzes angeordneten Enden mittels eines elastischen Verbindungselementes in Form einer Zugfeder miteinander verbunden. Dadurch kann ein Längenausgleich während der Benutzung erzielt werden.

Auch nicht vorveröffentlichte WO 2008/023228 A1 beschreibt eine Sitzeinheit aus einem Sitz sowie Rückenteil. Sowohl der Sitz als auch der Rückenteil umfassen ihrerseits eigene elastisch ausgebildete Stützteile, welche von einem durchlaufend ausgebildeten Überzugsmaterial abgedeckt werden. Im Übergangsbereich zwischen dem Sitz und Rückenteil ist das Überzugsmaterial über eine Querstrebe geschlungen und anschließend fortlaufend über den Rückenteil erstrecken bis zu dessen Rückseite verlaufend angeordnet. Die Lastabtragung erfolgt ausgehend vom Überzugsmaterial auf die elastisch ausgebildeten Stützteile des Sitzes bzw. der Rückenlehne.

Aus der EP 1 680 981 A1 ist ein Stuhl mit einer einteiligen Sitz- und Rückenlehne aus einem gebogenen Schalenrahmen-Rohr bekannt geworden. Zur Abstützung des Benutzers wird ein einteiliges Gestrick mit einem umlaufenden Kedersaum verwendet. Das gebogene Schalenrahmen-Rohr ist im umlaufenden Kedersaum aufgenommen, wobei im Kniekehlenbereich die Bespannung wenigstens eine Öffnung aufweist, um so die Enden des Schalenrahmen-Rohrs mittels einer Spannstange auf Distanz zu halten. Dabei ist das Gestrick zwischen dem Sitz- und Rückenbereich durchlaufend angeordnet und weist eine einheitliche Festigkeit auf.

Die US 2004/0160109 A1 beschreibt einen Stuhl, dessen Sitz und Rückenteil durch einen Rahmenteil gebildet sind, der von einer sackförmigen Umhüllung umgeben ist. Diese Umhüllung bildet die Bespannung für den Stuhl und ist durchlaufend zwischen dem Sitz und Rückenteil angeordnet. Der dem Tragrahmen zugewendete Randabschnitt der Bespannung weist eine geringere Elastizität auf, als die beiden die Auflage bildenden Schichten.

Aus der US 5,013,089 A ist eine Sitzanordnung bekannt geworden, welche ein Traggestell sowie mehrere Rahmenelemente zur Ausbildung des Sitz- sowie Rückenteils umfasst. Die beiden den Sitz- sowie Rückenrahmen bildenden Rahmenteile sind durch jeweils eigene, rundum durchlaufende Rahmen gebildet. Die beiden Rahmenteile sind über Stützwinkel miteinander zu einem Sitzrahmen verbunden. Die Sitzfläche sowie die Rückenfläche sind dabei jeweils mit einem an dem Rahmenteil gehaltertem Gestrick zur Ausbildung der Sitz- bzw. Rückenauflage bespannt. Aufgrund der beiden Rahmenteile zur Bildung des Sitz- sowie Rückenteils ist ein individuelles Einnehmen von unterschiedlichen Sitzpositionen nicht möglich.

Sitze mit Polsterungen aus Schaumkunststoff sind im modernen Fahrzeugbau sehr weit verbreitet. Vor allem werden sie in Schienen- und Straßenfahrzeugen, aber auch im überwiegenden Maß in Flugzeugen eingesetzt. Während bereits die für Schienenfahrzeuge geltenden Vorschriften hinsichtlich der selbstverlöschenden Ausbildung der verwendeten Materialien bzw. der Rauchentwicklung sehr strenge Richtlinien vorschreiben, so werden diese von den in der Flugzeugindustrie geltenden Vorschriften aber noch weit übertroffen. So ist bei für den Einsatz in Flugzeugen zugelassenen Sitzen eine Prüfung vorgeschrieben, bei der die Polster in ihrer zum Einbau vorgesehenen Ausstattung einer Flamme aus einem Brenner direkt ausgesetzt werden. Diese Flamme wirkt über eine Zeitdauer von 2 Minuten direkt auf das Polster ein, wonach die Flamme abgelöscht bzw. entfernt wird. Der Polster wird, falls bis dahin die Flammen nicht selbst erloschen sind, nach 5 Minuten gelöscht. Nach diesem Brandtest darf der Gewichtsverlust des Polsters nicht höher als 10 % sein. Um diese äußerst strengen Vorschriften zu erfüllen, gleichzeitig auch einen hohen Sitzkomfort in den Sitzen bei den lang andauernden Flugreisen und ein geringes Gewicht zu erzielen, wurden Sitzpolster aus verschiedenen, mit Flammschutzmitteln versehenen, offenzelligen elastischen Weichschaumkunststoffen mit unterschiedlichen Raumgewichten zusammengeklebt.

Der vorliegenden Erfindung liegt die Aufgabe zugrunde, einen Sitz bereitzustellen, der bei geringerem Eigengewicht einen verbesserten Sitzkomfort aufweist sowie unterschiedliche Benutzungspositionen für den Benutzer ermöglicht.

Diese Aufgabe der Erfindung wird dadurch gelöst, dass die Zone mit der größten elastischen Verformbarkeit zwischen dem Sitzbereich und dem Rückenbereich ausgebildet ist und dass in einem Längsrandbereich des Gestricks beidseits der den Sitzbereich bildenden Zone jeweils ein weiterer streifenförmiger Randabschnitt der Zone mit der größten elastischen Verformbarkeit angeordnet ist. Der sich durch die Merkmale des Anspruches 1 ergebende Vorteil liegt darin, dass dadurch für den Benutzer in der aufrechten Sitzposition die Möglichkeit geschaffen wird, während der Benutzung die Bespannung ausreichend und soweit dehnen zu können, dass ein Einsinken des Benutzers in die am Rahmen aufgespannte Bespannung ermöglicht wird. Durch diese hohe elastische Verformbarkeit des Gestricks wird ein Hineinsinken des Benutzers zwischen die seitlich angeordneten Rahmenteile in die Bespannung ermöglicht und trotzdem eine optimale Abstützung über die gesamte Auflage- bzw. Abstützfläche des Benutzers erzielt. Die daran angrenzenden Zonen des Sitz- sowie Rückenbereiches weisen bezüglich der Zone mit der größten elastischen Verformbarkeit eine dazu geringere Verformbarkeit auf, wodurch hier ein entsprechender Gegendruck der Bespannung während der Benutzung auf den Benutzer ausgeübt wird. Weiters steht im Bereich der Sitzfläche in ihrem Randbereich eine Zone mit hoher Elastizität zur Verfügung, welche ein kontrolliertes Einsinken bzw. Abklappen der gesamten Sitzfläche in Richtung der Sitzeinheit ermöglicht. Durch die zwischen der Sitzfläche und der Rückenlehne durchlaufende Bespannung können störende Rahmenteile für die Einnahme unterschiedlicher Benutzungspositionen vermieden werden. Dadurch wird für einen Benutzer die Möglichkeit geschaffen, die gesamte, durchlaufend ausgebildete Bespannung für seine Abstützung am Sitz zu verwenden und individuelle Sitzpositionen ohne jegliche Verstellung eines Sitzteils einnehmen zu können. Durch die Anordnung mehrerer unterschiedlicher Zonen über die Längs- bzw. Quererstreckung des Gestricks kann die elastische Verformbarkeit der Bespannung derart eingestellt werden, dass bei feststehender Rückenlehne bezüglich des Sitzrahmens trotzdem unterschiedliche Sitz- bzw. Liegepositionen eingenommen werden können. Aufgrund der unterschiedlichen elastischen Formbarkeit der einzelnen Zonen kann die gewünschte Abstützung des Benutzers an der Bespannung für verschiedene Benutzungspositionen vorgegeben werden, ohne dass dabei eine Verstellung eines Rahmenteils des Sitzes notwendig ist. Darüber hinaus wird durch die als Gestrick ausgebildete Bespannung für die Abstützung des Benutzers ein wesentlich geringeres Volumen benötigt, als bei bisher üblicherweise eingesetzten Polstern aus Schaumkunststoff, wodurch hier für das Abbrandverhalten eine zu vernachlässigende Menge an Materialien vorliegt, welche einem möglichen Abbrand und der damit verbundenen Rauchentwicklung ausgesetzt sind. Vorteilhaft ist weiters eine Ausbildung nach Anspruch 2, da so in gewissen Grenzen bereits sehr geringer Zugkraft eine hohe Dehnung der Bespannung in diesem Bereich erzielt werden kann und trotzdem eine ausreichende Abstützung während der Benutzung sichergestellt ist. Vorteilhaft ist auch eine Weiterbildung nach Anspruch 3, da dadurch für den Rückenbereich eine höhere Abstützkraft und damit verbunden eine festere bzw. starrere Bespannung geschaffen werden kann.

Durch die Weiterbildung nach Anspruch 4 wird erreicht, dass so ein an die Form des menschlichen Körpers angepasster Sitzbereich geschaffen werden kann, welcher trotzdem eine ausreichende elastische Verformbarkeit zulässt.

Durch die Ausbildung nach Anspruch 5 kann das Dehnverhalten und damit die zur Verfügung stehende Anzahl der Maschen des Gestricks festgelegt bzw. vorbestimmt werden.

Vorteilhaft ist auch eine Ausbildung nach Anspruch 6, da dadurch gerade im Bereich der Sitzfläche eine ausreichende Abstützung des Benutzers erreicht werden kann und trotzdem ein ausreichender Sitzkomfort erzielbar ist.

Nach einer vorteilhaften Weiterbildung gemäß Anspruch 7 wird der Anteil der hochelastischen Zone vergrößert, wodurch ein noch gleichmäßigeres Einsinken des Benutzers in die Bespannung ermöglicht wird.

Von Vorteil ist aber auch eine Ausbildung nach Anspruch 8, da dadurch mit wenigen Bauteilen zur Bildung des Sitzes das Auslangen gefunden werden kann und so das Gesamtgewicht des Sitzes weiter reduziert werden kann. Dabei wird darüber hinaus für die Bespannung eine ausreichende Abstützung erzielt, wodurch eine optimale Lastabtragung von der Bespannung hin zur Stützeinheit erfolgt.

Gemäß Anspruch 9 kann auf komplizierte Verstellmechanismen zwischen der Rückenlehne und dem Sitzbereich verzichtet werden, da unterschiedliche Sitz- bzw. Liegepositionen ausschließlich durch die unterschiedliche Elastizität bzw. das Dehnverhalten der Bespannung ermöglicht wird.

Möglich ist dabei auch eine Ausbildung nach Anspruch 10 weil dadurch jener Weg minimiert wird, welche ein Benutzer während dem Platznehmen am Sitz bis zum ersten Kontakt an der Bespannung zurücklegt. Weiters wird dadurch noch eine bessere Abstützung während der Benutzung in Art eines Schalensitzes in der Bespannung erzielt.

Die Ausgestaltung nach Anspruch 11 ermöglicht ein kontrolliertes Einsinken des Benutzers in den Sitzbereich. Darüber hinaus wird aber auch ein Herausrutschen aus dem Sitz während der Benutzung, insbesondere bei starken Verzögerungen, vermieden.

Vorteilhaft ist die Ausbildung nach Anspruch 12, weil dadurch aus der Bespannung und dem Grundrahmen eine Einheit geschaffen werden kann, welche Vormontiert für das Reinigungspersonal bzw. Servicepersonal bereitgestellt werden kann.

Von Vorteil ist aber auch eine Ausbildung nach Anspruch 13, da dadurch einfach ein Austausch bei Verschmutzung oder Zerstörung der Bespannung ermöglicht wird.

Vorteilhaft ist auch eine weitere Ausführungsform nach Anspruch 14, da dadurch eine noch stabilere Ausbildung des Sitzes erzielbar ist und gewisse Trag- bzw. Stützfunktionen vom Verkleidungselement an den Grundrahmen übertragen werden können. Damit kann das Verkleidungselement leichter und weniger stabil ausgebildet werden.

Vorteilhaft ist weiters eine Ausbildung nach Anspruch 15, da so bei zu starker Belastung bzw. schweren Benutzern eine direkte Anlage an der Innenfläche des Verkleidungselements durch die Zwischenlage gedämpft werden kann. Weiters ist es durch diese Ausbildung möglich, das Abstützverhalten der Bespannung und der Zwischenlage einfach aufeinander abstimmen zu können.

Nach einer anderen Ausführungsvariante gemäß Anspruch 16 wird eine zu starke elastische Verformung der Bespannung in gewissen Bereichen für den Benutzer verhindert und dadurch die maximale Abstützkraft der Bespannung im Zusammenwirken mit dem oder den Stützgurt(en) erhöht. Gleichfalls kann damit aber auch ein Durchfedern bzw. Aufschlagen des Benutzers mitsamt der Bespannung am Verkleidungselement verhindert werden.

Vorteilhaft ist auch eine Weiterbildung nach Anspruch 17, da dadurch für den Benutzer der Freiraum für die Zugängigkeit und das Platznehmen an Sitz vergrößert wird. Nach dem entsprechenden Aufklappen wird die Sitzfläche auf das volle Ausmaß vergrößert und so auch im Kniekehlenbereich eine ausreichende Abstützung erzielt.

Bei der Ausgestaltung nach Anspruch 18 ist von Vorteil, dass so in Kombination mit der Bespannung und dem verschwenkbaren Rahmenteil eine ausreichend stabile Abstützung während der Benutzung des Sitzes für den Benutzer sichergestellt ist.

Durch die Ausbildung nach Anspruch 19 kann die Verschwenkbewegung des Rahmenteils für den Benutzer einfach ermöglicht werden. Vorteilhaft ist dabei auch, dass so für den Benutzer jegliche Betätigungsvorgänge vermieden und die Verschwenkung des Rahmenteils zwischen der Bereitschaftsstellung und der Gebrauchsstellung automatisiert durchgeführt werden können. Die Erkennung kann hier beispielsweise gewichtskraftmäßig erfolgen, wobei bei Wegnahme der Gewichtskraft der Rahmenteil abgeklappt und bei Benutzung und Belastung des Sitzes mit einer Gewichtskraft der Rahmenteil und damit der Stützabschnitt hochgeklappt in der Gebrauchsstellung angeordnet ist.

Gemäß einer Ausbildung, wie im Anspruch 20 beschrieben, wird eine noch bessere Abstützung des Kopfes des Benutzers am Sitz erzielt. Dabei erweist sich diese Ausgestaltung vorteilhaft, weil es dadurch für einen Benutzer einfach ermöglicht wird, eine schalförmige Aufnahme bezüglich des Kopfes durch die verstellbaren Seitenteile zu erzielen und so auch im Schläfenbereich bei einer Ruheposition eine ausreichende Abstützung sicher zu stellen. Die Erfindung wird im nachfolgenden anhand der in den Zeichnungen dargestellten Ausführungsbeispiele näher erläutert.

Es zeigen:
- Fig. 1: einen erfindungsgemäßen Sitz in vereinfachter schaubildlicher Darstellung, mit Blickrichtung auf die Benutzerseite und in der Gebrauchsstellung der gesamten Sitzfläche;
- Fig. 2: den Sitz nach Fig. 1 bei verkürzter Sitzfläche, in vereinfachter schaubildlicher Darstellung und Blickrichtung auf die Benutzerseite;
- Fig. 3: den Sitz nach Fig. 1 in vereinfachter schaubildlicher Darstellung, mit Blickrichtung auf seine Rückseite;
- Fig. 4: einen Teil des Sitzes nach den Fig. 1 bis 3 während der Benutzung, in Seitenansicht und stark vereinfachter Darstellung;
- Fig. 5: eine mögliche Ausbildung der Bespannung mit unterschiedlichen Zonen in Draufsicht bei gestreckter, flacher Position;
- Fig. 6: eine schematisch vereinfachte Darstellung der Bindungsansicht der durch ein Gestrick gebildeten Bespannung- schematische Bindungsansicht;
- Fig. 7: eine andere Form der Darstellung der Bindung der einzelnen Fäden nach Fig. 6-bindungstechnische Darstellung;
- Fig. 8: das Verkleidungselement des Sitzes aus dem Bereich seiner Rückseite, bei entferntem Grundrahmen und in schaubildlich vereinfachter Darstellung;
- Fig. 9: das Verkleidungselement des Sitzes nach Fig. 8 in schaubildlich vereinfachter Darstellung sowie einer Ansicht auf die Rückseite;
- Fig. 10: einen Teilbereich des Verkleidungselements nach den Fig. 8 und 9 in Ansicht geschnitten, gemäß den Linien IX - IX in Fig.8 sowie vereinfachter schematischer Darstellung;
- Fig. 11: den Grundrahmen des Sitzes in schaubildlich vereinfachter Darstellung;
- Fig. 12: einen anderen Teilbereich eines Verkleidungselements mit einem darin angeordneten Grundrahmen, in Ansicht geschnitten und vereinfachter schematischer Darstellung;
- Fig. 13: eine mögliche Ausbildung der Kopfstütze für den Sitz, in einer Ansicht von der Benutzerseite sowie vereinfachter schaubildlicher Darstellung;
- Fig. 14: die Kopfstütze nach Fig. 13 in einer Ansicht auf ihre Rückseite, in vereinfachter schematischer Darstellung;
- Fig. 15: eine mögliche Ausbildung eines Tisches in schaubildlich vereinfachter Darstellung;
- Fig. 16: den Tisch nach Fig. 15 in Ansicht geschnitten gemäß den Linien XVI - XVI in Fig. 15;
- Fig. 17: einen Teil des Sitzes nach den Fig. 1 bis 3, im Sitzbereich und einer anderen Ausbildung der Verstellmechanik nach Fig. 11, in stark vereinfachter schematischer Darstellung;
- Fig. 18: einen Prinzipskizze der Verstellmechanik für den verschwenkbaren Rahmenteil in stark vereinfachter schematischer Darstellung;
- Fig. 19: einen anderen Teilbereich des Sitzes nach den Fig. 1 bis 3, mit der Betätigungseinrichtung der Verstellmechanik zur Verstellung des verstellbaren Rahmenteils, in stark vereinfachter schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

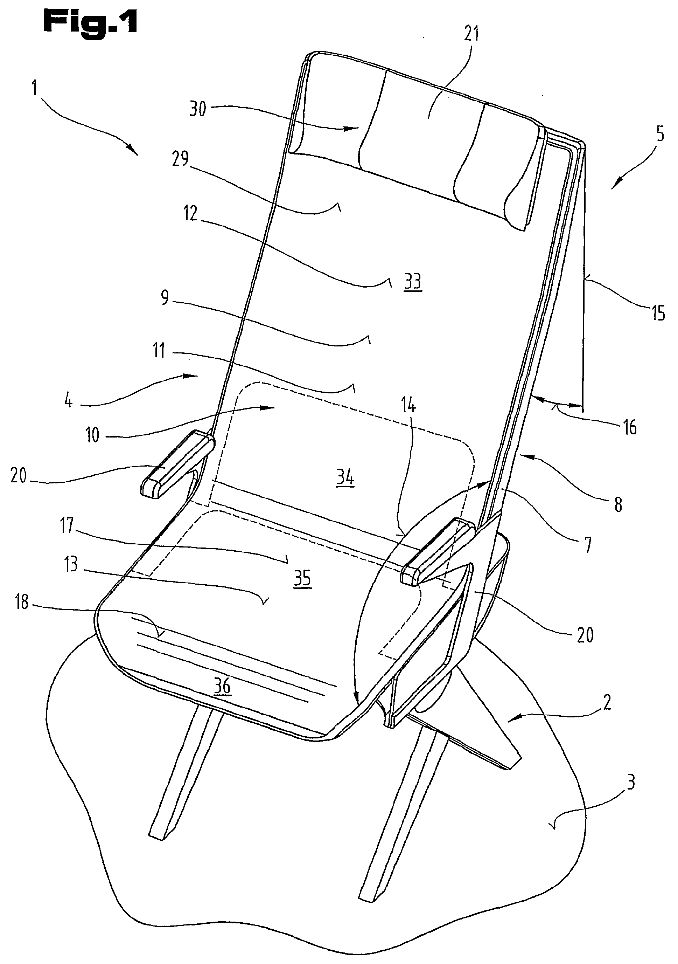

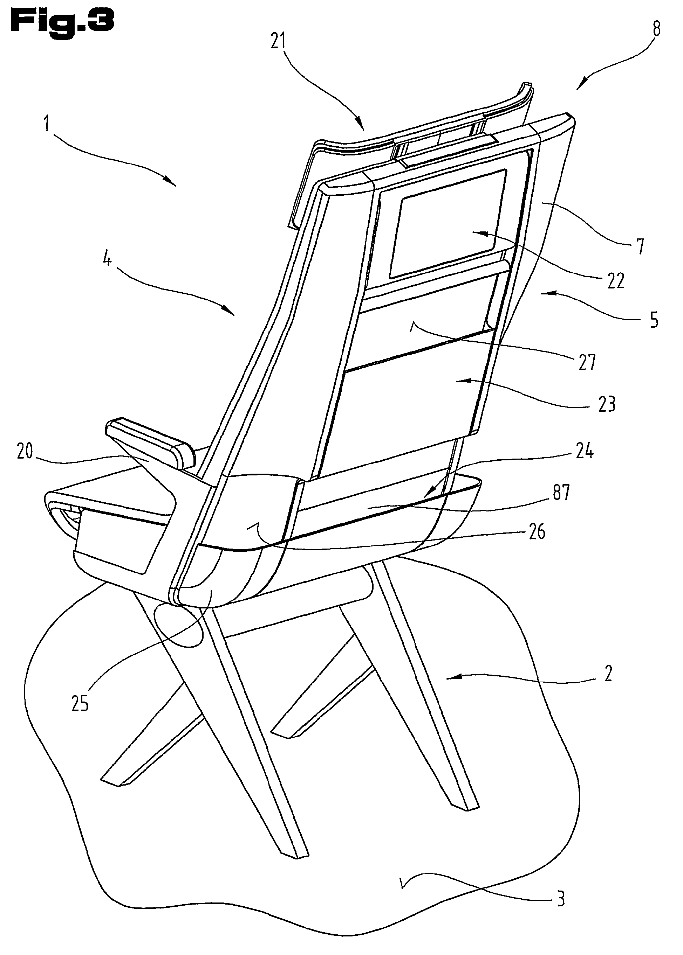

In den Fig. 1 bis 3 ist ein Sitz 1, beispielsweise in einem öffentlichen Verkehrsmittel, wie z.B. einem Flugzeug, einer Eisenbahn, einer Straßenbahn oder dgl., schematisch vereinfacht dargestellt. Es wäre aber auch möglich, diesen Sitz 1 z.B. in anderen öffentlichen Verkehrsmitteln, wie einer U-Bahn oder einem Autobaus, einzusetzen. Unabhängig davon könnte aber der Sitz 1 auch bei Weglassen und/oder durch Hinzufügen einiger später noch näher beschrieben Komponenten auch als Sitzgelegenheit in Veranstaltungsräumen wie Theater, Kongresshaus, öffentlichen Veranstaltungshäusern, Mehrzweckgebäuden, usw. eingesetzt werden.

Bei diesem hier gezeigten Ausführungsbeispiel ist der besseren Übersichtlichkeit halber nur ein einziger Sitz 1 für einen nicht näher dargestellten Benutzer gezeigt, wobei es aber möglich ist, mehrere derartig ausgebildete Sitze 1 nebeneinander zu einer zusammengehörigen Sitzreihe sowie auch mehrere hintereinander anzuordnen.

Dieser Sitz 1 umfasst ein Traggestell 2, welches auf einer vereinfacht dargestellten Aufstandsfläche 3 abgestützt bzw. an bzw. in dieser gehaltert ist. Auf die Darstellung diverser Verbindungsmöglichkeiten wurde der besseren Übersichtlichkeit halber verzichtet, wobei diese aus dem bekannten Stand der Technik frei wählbar und einsetzbar sind. Der Sitz 1 weist eine dem Benutzer zugewendete sowie diesen zum Sitzen und/oder Liegen aufnehmende Benutzerseite 4 sowie eine davon abgewendete Rückseite 5 auf. Die Rückseite 5 ist dabei einem weiteren Benutzer zugewendet, welcher sich bei mehreren, hintereinander angeordneten Sitzen 1 unmittelbar hinter diesem befindet. Der Sitz 1 umfasst weiters einen Grundrahmen 6 sowie ein Verkleidungselement 7, welche zusammen eine Stützeinheit 8 ausbilden. Bevorzugt ist das Verkleidungselement 7 mit dem Traggestell 2 verbunden bzw. an diesem gehaltert, wobei der Grundrahmen 6 vom Verkleidungselement 7 aufgenommen werden kann. Dabei ist das Verkleidungselement 7 im Bereich der Rückseite 5 des Sitzes 1 angeordnet. Die Stützeinheit 8 kann weiters in sich starr ausgebildet sein, wobei hier auf jegliche Verstellmöglichkeit relativ gegenüber dem Traggestell 2 verzichtet wird.

Die Benutzerseite 4 des Sitzes 1 bildet eine Stützfläche 9 bzw. Aufnahmefläche für den Benutzer des Sitzes 1 aus. Diese Stützfläche 9 ist bei diesem hier gezeigten Ausführungsbeispiel durch eine Bespannung 10, beispielsweise in Form eines Gestricks 11, gebildet. Diese Bespannung 10 dient zur Abstützung des Benutzers und ist hier durchlaufend, ausgehend von einem Rückenbereich 12 hin zu einem Sitzbereich 13, ausgebildet. Dies hat den Vorteil, dass in der Übergangszone zwischen dem Rücken- und Sitzbereich 12, 13 kein Querholm des Grundrahmens 6 angeordnet ist und damit ausschließlich die Bespannung 10 zur Abstützung und Aufnahme des Benutzers dient. In der unbenutzten Ausgangsstellung der Bespannung 10 schließen der Rückenbereich 12 sowie der Sitzbereich 13 zwischen sich einen Winkel 14 ein, der in einem Bereich mit einer unteren Grenze von 90°, insbesondere 110°, bevorzugt 125° und einer oberen Grenze von 180°, insbesondere 150°, bevorzugt 135° liegt. Ein Wert des Winkels 14 kann auch zwischen 128° und 132° liegen.

Der Grundrahmen 6 im Abschnitt des Rückenbereichs 12 ist gegenüber einer vereinfacht dargestellten Vertikalen 15 um einen Winkel 16 in einem Bereich mit einer unteren Grenze von 0°, insbesondere 20° und einer oberen Grenze von 45°, insbesondere 30°. Dieser Winkel 16 bezüglich der Vertikalen 15 ist von der Ausführungsform bzw. Verwendung des Sitzes 1 abhängig, jedoch im jeweiligen Einsatzfall für den Benutzer stets fix vorgegeben und für diesen unveränderbar ausgebildet. Dadurch fallen komplizierte Verstellmechanismen wie bei ansonst üblichen Flugzeugsitzen weg. Die trotzdem unterschiedlichen Sitz- bzw. Ruhepositionen werden alleinig durch die spezielle Ausbildung der Bespannung 10 ermöglicht.

Der bezüglich der Vertikalen 15 ebenfalls starr ausgebildete Abschnitt des Grundrahmen 6 im Rückenbereich 12 befindet sich in der vorgesehenen stets feststehenden Gebrauchsposition in einer Winkelstellung bezüglich der Vertikalen 15, welche im Fluggastverkehr als so genannte "recline position" bezeichnet wird und üblicherweise erst durch eine eigene bewusste Verstellung zumindest eines Sitzteils bei herkömmlichen Sitzen eingestellt wird. Dadurch wird ein größerer Winkel 16 bezüglich der Vertikalen 15 im Rückenbereich 12 der Bespannung 10 gegenüber der normalen aufrechten Sitzposition bei herkömmlichen Sitzen ausgebildet.

Wie bereits zuvor beschrieben, bildet die Bespannung 10 durchlaufend, ausgehend vom Rückenbereich 12 hin zum Sitzbereich 13 die Stützfläche 9 für den Benutzer aus. Die detaillierte Beschreibung der Bespannung 10, insbesondere wenn es sich dabei um das Gestrick 11 handelt, erfolgt nachfolgend. Der Sitzbereich 13 kann seinerseits in einen Gesäßbereich 17 sowie einen Oberschenkelbereich 18 unterteilt werden. Diese zuvor bezeichneten Bereiche bilden wiederum eigene Zonen an der Bespannung 10 aus, wobei innerhalb dieser Zonen noch eine weitere Unterteilung erfolgen kann. Diese Bereiche bzw. Zonen werden nachfolgend noch näher beschrieben. Die Bespannung 10 kann ihrerseits mit unterschiedlichsten Befestigungsmöglichkeiten mit dem feststehenden Grundrahmen 6 verbunden bzw. an diesem gehaltert werden. Dies kann beispielsweise durch eine schlauchförmige Aufnahme in den Randbereichen, unterschiedlichste Kederlösungen usw. erfolgen. Bei dieser Ausführungsform wird der Grundrahmen 6 mitsamt der daran gehalterten Bespannung 10 mit dem Verkleidungselement 7 verbunden, wodurch die Stützeinheit 8 gebildet wird. Dadurch wird die Möglichkeit geschaffen, den Grundrahmen 6 mitsamt der Bespannung 10 vom Verkleidungselement 7 abzunehmen und bei Verschmutzung sowie einer Beschädigung einen raschen Tausch vorzunehmen.

Unabhängig davon wäre es aber auch noch möglich, dass zur Versteifung des Verkleidungselements 7 und zur Erleichterung der Montage oder Demontage der Bespannung 10 am Sitz 1, insbesondere am Verkleidungselement 7, diese auf einem eigenen zusätzlichen Bespannungstragrahmen 19 gehaltert bzw. damit verbunden ist. Der Bespannungstragrahmen 19 kann seinerseits mit dem Grundrahmen 6 abnehmbar verbunden sein, wenn der Grundrahmen 6 mit dem Verkleidungselement 7 verbunden ist und die Stützeinheit 8 ausbildet. Dadurch wird für das Reinigungs- bzw. Servicepersonal ein rascher und einfacher Austausch der gesamten Bespannung 10, beispielsweise nach einer Verschmutzung bzw. Beschädigung derselben erzielt.

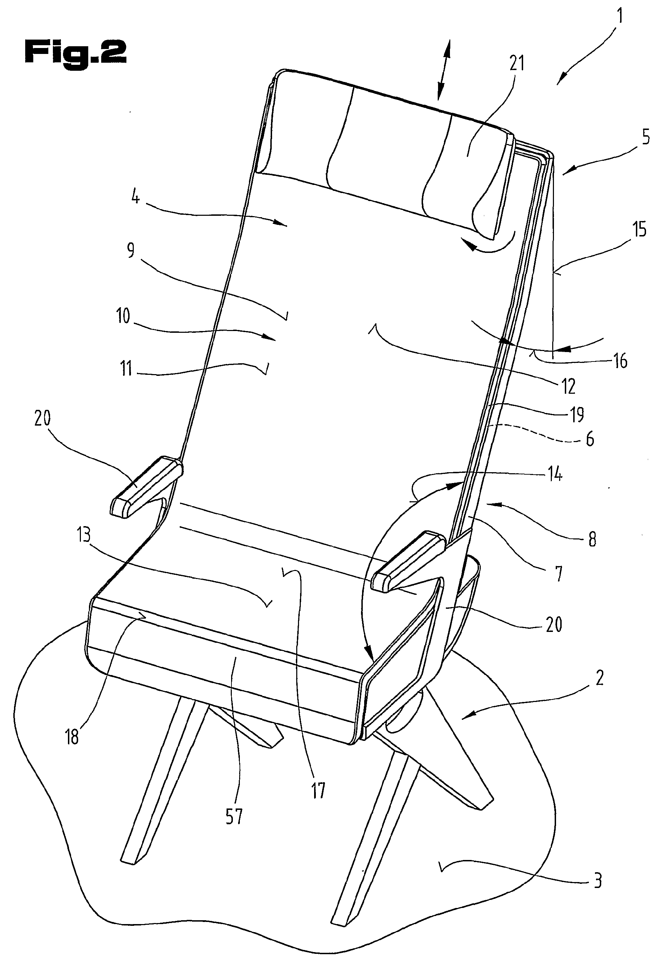

Aus einer Zusammenschau der Fig. 1 und 2 ist noch zu ersehen, dass der vordere dem Kniebereich des Benutzers zugewendete Sitzabschnitt 57 des Sitzbereiches 13 in seiner Länge verkürzt werden kann. Dazu sind schon verschiedenste Möglichkeiten aus dem Stand der Technik bekannt geworden. Hier wird die Verkürzung durch einfaches Abklappen der Bespannung 10 mitsamt dem Grundrahmen 6 und/oder Bespannungstragrahmen 19 realisiert. Diese Verkürzung dient dazu, um den Zwischenraum zwischen unmittelbar hintereinander angeordneten Sitzen 1 für das Zu- sowie Abgehen für den Benutzer zu vergrößern.. In der Bereitschaftsposition befindet sich der dem Kniekehlenbereich zugewendete Sitzabschnitt 57 des Sitzbereiches 13 in der abgeklappten Stellung gemäß der Darstellung in der Fig. 2. Nimmt der Benutzer auf der Sitzfläche bzw. dem Sitzbereich 13 Platz, wird der abgeklappte Sitzabschnitt 57 des Sitzbereiches 13 in die in der Fig. 1 dargestellte Position verstellt, insbesondere hochgeklappt, und nimmt seine Gebrauchsposition ein. Die Verstellbewegung erfolgt bevorzugt durch eine Schwenkbewegung eines Abschnitts des Grundrahmens 6 und/oder Bespannungstragrahmens 19. Die Bespannung 10 macht diese Verformung aufgrund ihrer Elastizität und Dehnungseigenschaften ohne Probleme mit. Erhebt sich der Benutzer vom Sitzbereich, kommt es zu einer Entlastung der Bespannung 10 und der vordere Sitzbereichsabschnitt wird wieder in die abgeklappte Stellung verstellt. Anstelle des Abklappens wäre aber auch ein Hochklappen des vorderen Sitzabschnittes möglich, führt aber zu einer zusätzlichen Verkleinerung des Freiraums im Sitzbereich 13. Diese Verstellbewegung wird bevorzugt automatisiert ohne eine eigens vom Benutzer wissentlich auszulösende Betätigung durchgeführt, da es sich dabei um einen entgegen dem üblichen intuitiven Bewegungsablauf gerichteten Verstellvorgang handelt. Die Verschwenkbewegung sowie deren Durchführung werden nachfolgend beschrieben.

Weiters umfasst der Sitz 1 jeweils seitlich des Sitzbereiches 13 angeordnete und vereinfacht dargestellte Armlehnen 20, welche ebenfalls bevorzugt feststehend an der Stützeinheit 8, insbesondere dem Grundrahmen 6 und/oder dem Verkleidungselement 7 sowie gegebenenfalls am Traggestell 2 gehaltert sind. Bevorzugt werden jedem Sitz 1 beidseits eigene Armlehnen 20 zugeordnet. Dadurch werden bei einer mehrfachen Anordnung von Sitzen 1 nebeneinander jedem der einzelnen Benutzer jeweils seine eigenen beiden Armlehnen zur Verfügung gestellt.

Oberhalb des Rückenbereichs 12 ist eine vereinfacht dargestellte Kopfstütze 21 vorgesehen, wobei die Ausbildung sowie die Verstellmöglichkeiten derselben ebenfalls nachfolgend detailliert beschrieben werden. Dabei ist die Kopfstütze 21 der Bespannung 10 auf der Benutzerseite 4 vorgeordnet.

Im Bereich der Rückenseite 5 des Sitzes 1 sind für einen weiteren Benutzer verschiedene Ein- bzw. Vorrichtungen vorgesehen bzw. angeordnet. Ausgehend von dem der Aufstandsfläche 3 am weitesten distanzierten Bereich des Sitzes 1 umfasst dieser hier ein Anzeigeelement 22, einen schwenkbar gelagerten Tisch 23, zumindest ein Aufnahmeelement 24 für Zeitschriften bzw. persönliche Utensilien sowie zumindest ein bevorzugt jedoch an beiden Randbereichen angeordnetes Halteelement 25. Dieses Halteelement 25 kann beispielsweise zur Halterung von flaschen- bzw. dosenförmigen Gegenständen, insbesondere zur Aufbewahrung von Getränken, dienen. Im Bereich des oder der Halteelemente 25 weist bei diesem Ausführungsbeispiel das Verkleidungselement 7 eine in Richtung auf die Benutzerseite 4 hin verwölbte, konkave Oberfläche 26 auf, die sich zusätzlich noch in Längsrichtung des Rückenbereiches 12 erstreckt. Durch diese konkav verwölbte Oberfläche 26 ist es möglich, diverse Gegenstände im Zusammenwirken mit dem Halteelement 25 am Sitz 1, insbesondere dem Verkleidungselement 7 Platz sparend zu haltern. Weiters ist es dadurch aber auch für Personen mit einer größeren Körpergröße möglich, in diesen Bereichen den abgewinkelten Kniebereich während der Benutzung des nachfolgenden Sitzes 1 dort seitlich des Sitzes unterzubringen. Dadurch wird auch für Personen mit längeren Oberschenkeln die Möglichkeit geschaffen, bequem am Sitz 1 Platz zu nehmen und auch eine entspannte Position einzunehmen. Das Aufnahmeelement 24 sowie das Halteelement 25 können ebenfalls durch eine Bespannung gebildet werden, welche insbesondere wieder aus einem Gestrick oder dgl. gefertigt sein kann.

Die zuvor beschriebenen zusätzlichen Bauteile im Bereich der Rückseite 5, nämlich das Anzeigeelement 22, der schwenkbare Tisch 23, sowie das Aufnahmeelement 24 sind in einer zentral bezüglich der Breite des Verkleidungselements 7 ausgebildeten Vertiefung 27 angeordnet. Diese Vertiefung 27 weist eine Längserstreckung in Richtung einer durch den Grundrahmen 6 bzw. den Bespannungstragrahmen 19 gebildeten Rückenlehne 28 auf. Durch die Ausbildung der Vertiefung 27 ist es möglich, die zuvor beschriebenen Bauteile bzw. den durch das Aufnahmeelement 24 gebildeten Aufnahmeraum den Anforderungen entsprechend auszubilden bzw. anzuordnen, um so in diesem Bereich bzw. Abschnitt des Sitzes 1 mit einer geringen Gesamtbautiefe das Auslangen zu finden.

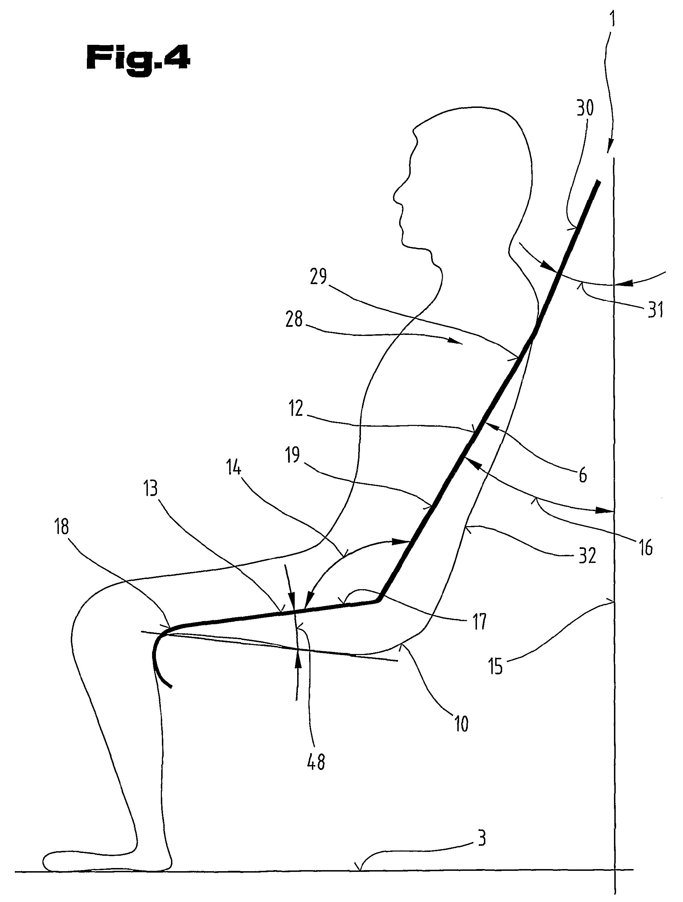

In der Fig. 4 ist die Sitzgeometrie des Sitzes 1 in Seitenansicht, stark vereinfacht, schematisch dargestellt. Der Grundrahmen 6 bzw. der Bespannungstragrahmen 19 ist dabei vereinfacht in Form eines dickeren Striches dargestellt, wobei in unbelastetem Zustand der Bespannung 10 diese in etwa der Kontur des dargestellten Grundrahmens 6 bzw. Bespannungstragrahmens 19 aufweist.

Im Bereich der Rückenlehne 28 bzw. deren Längsverlauf ist noch weiters dargestellt, dass anschließend an den Rückenbereich 12 ein dem Benutzer zugewendeter Schulterbereich 29 sowie Kopfbereich 30 ausgebildet ist. Im Übergang zwischen Rückenbereich 12 und dem Schulterbereich 29 weist der Grundrahmen 6 bzw. der Bespannungstragrahmen 19 einen Knick auf, wodurch zwischen dem Kopfbereich 30 und der Vertikalen 15 ein flacherer Winkel 31 ausgebildet wird, als der Winkel 16 zwischen dem Rückenbereich 12 und der Vertikalen 15. Der Längsverlauf des Grundrahmens 6 bzw. des Bespannungstragrahmens 19 ist ausgehend vom Kopfbereich 30 hin zum Oberschenkelbereich 18 so gewählt, dass in Kombination mit der Bespannung 10, insbesondere dem Sitztextil bzw. dem Gestrick 11, sowohl eine aufrecht sitzende als auch eine leicht liegende Positionierung des menschlichen Körpers ermöglicht wird, ohne dass eine Verstellung der Rückenlehne 28 durchzuführen ist. Die geknickte Ausbildung im Bereich der Rückenlehne 28 dient auch noch dazu, einen größeren Freiraum für den in der Reihe nachfolgenden Passagier zu schaffen und so die Hinterkante des Sitzes 1 von diesem weiter abzuwenden. Darüber hinaus wird auch noch eine optimierte Anordnung und Ausgangsposition für das Anzeigeelement 22 geschaffen.

Die gewählte und dargestellte Sitzposition in der Fig. 4 zeigt schematisch den Verlauf des Grundrahmens 6 bzw. des Bespannungstragrahmens 19 beispielhaft für die aufrechte Sitzhaltung des Benutzers. Die Bespannung 10 ist weiters durch die Belastung des Benutzers an seine Körperkontur 32 angepasst, wie dies vereinfacht ebenfalls dargestellt ist. Diese Verformung der Bespannung 10 ist durch die dieser innewohnenden elastischen Eigenschaften möglich. Wie bereits zuvor beschrieben, ist es vorteilhaft, wenn die Bespannung 10 aus dem Gestrick 11 gebildet ist, wobei die Bespannung 10 auch als Sitztextil bezeichnet werden kann, welches als Maschenware, beispielsweise auf einer Flachstrickmaschine gefertigt werden kann.

Bei dem hier die Bespannung 10 bildenden Gestrick 11 handelt es sich um ein so genanntes einteiliges Gestrick 11, welches sowohl den Sitzbereich 13, den Rückenbereich 12 sowie den Schulter- und Kopfbereich 29, 30 durchgehend bzw. durchlaufend bildet. Als freitragende Konstruktion wird das Gestrick 11 am Grundrahmen 6 gegebenenfalls unter Zwischenschaltung des Bespannungstragrahmens 19 befestigt und vorgespannt. Der Winkel 14 zwischen dem Sitzbereich 13 und dem Rückenbereich 12 ist hierbei deutlich größer gewählt als bei herkömmlichen Sitzen, in jener Position, in welcher sich die Rückenlehne 28 für ein aufrechtes Sitzen in der so genannten "upright position" befindet. Die Flexibilität des Gestricks 11 ermöglicht dabei sowohl ein gerades, aufrechtes Sitzen (upright) als auch eine annähernde Liegeposition (recline). Eine Verstellung des Winkels 16 zwischen dem Grundrahmen 6 und der Vertikalen 15 ist dafür jedoch nicht erforderlich und wird durch das elastische Verhalten des Gestricks 11 ermöglicht. Durch verschiedene nachfolgend noch näher beschriebene Zonen 33 bis 38 im Bereich des Gestricks 11, welche zueinander unterschiedliche Eigenschaften, wie Elastizitäten, Maschenweiten, Maschenanzahl usw. aufweisen, wird der Sitzkomfort realisiert bzw. angepasst. Bevorzugt sind die einzelnen Zonen 33 bis 38 in Strickrichtung symmetrisch zur Gestrickmitte angeordnet bzw. ausgebildet.

Im Bereich der Hauptsitzlast - nämlich dem Gesäßbereich 17 - befindet sich die stark-elastische Zone 35, um das Einsinken des Benutzers in die Bespannung zu gewährleisten. Weitere Zonen 33, 34 mit geringerer Elastizität im Bereich der Lenden- und Brustwirbelsäule stützen den Rücken des Benutzers und ermöglichen ebenfalls ein gewisses Einsinken in die Bespannung 10 im Bereich der Rückenlehne 28. Aufgrund der gewählten Maschenstruktur erfolgt eine optimale Anpassung der Sitz- und/oder Lehnenflächenkontur an die Gestalt bzw. Form des Körpers eines Benutzers in den unterschiedlichen Benutzungsstellungen. Im Randbereich wird das Gestrick 11 bevorzugt zweilagig als Schlauch ausgeführt und ermöglicht somit in bekannter Weise die Aufnahme eines Keders. Eine entsprechend im Bespannungstragrahmen 19 und/oder Grundrahmen 6 angeordnete Kedernut nimmt den Keder mit dem Gestrick 11 auf und gewährleistet während dem bestimmungsgemäßen Gebrauch eine optimale dauerhafte Verbindung zwischen diesem und dem Gestrick 11. Bevorzugt wird dabei das Gestrick 11 im Vergleich zu den geometrischen Außenabmessungen des Bespannungstragrahmens 19 und/oder Grundrahmens 6 im variablen Verhältnis kleiner hergestellt. Dieser Größenunterschied von Bespannungstragrahmen 19 bzw. Grundrahmen 6 und Gestrick 11 verursacht somit die benötigte Vorspannung in der unbenutzten Stellung der Bespannung 10. Diese Vorspannung kann dabei in Strickrichtung - also in Richtung von Längskanten 41 und/oder quer zur Gestricklängserstreckung wirken. Bei einer Vorspannung in beiden Richtungen wird eine sehr straffe Halterung des Gestricks 11 am Grundrahmen 6 und/oder Bespannungstragrahmen 19 erzielt.

Bei dem hier nachfolgend beschriebenen eingesetzten Material zur Bildung des Gestricks 11 handelt es sich um so genanntes Multifilamentgarn aus hochfestem Polyester (PES) mit flammhemmender Ausrüstung. In den elastischen Bereichen bzw. Zonen werden Gummifäden (ebenfalls flammhemmend ausgerüstet) hinzugegeben bzw. einzelne PES-Fäden durch Gummifäden ersetzt. Für die farblich gleichmäßige Optik des Gestricks 11 ist es möglich, den Gummifaden mit dem entsprechenden PES-Faden zu umspinnen. Als Fadenmaterial für das Gestrick 11 kann beispielsweise hochfestes Polyester (PES) und/oder Lycra eingesetzt werden. Die eingesetzten Fäden aus Lycra können zur farblichen Anpassung mit dem entsprechenden PES-Faden umsponnen sein. Alle eingesetzten Materialien erfüllen den ÖKO-Tex-Standard 100 und sind zusätzlich noch flammhemmend ausgerüstet. Der Faden aus dem hochfesten Polyester (PES) kann dabei die Spezifikation 167 dtex f36/1 aufweisen und wird unter anderem unter dem Handelsnamen "Trevira CS" vertrieben. Der weitere Faden aus dem Material Lycra weist die Spezifikation 475 dtex mit der Handelsbezeichnung "Ultraelastic" auf.

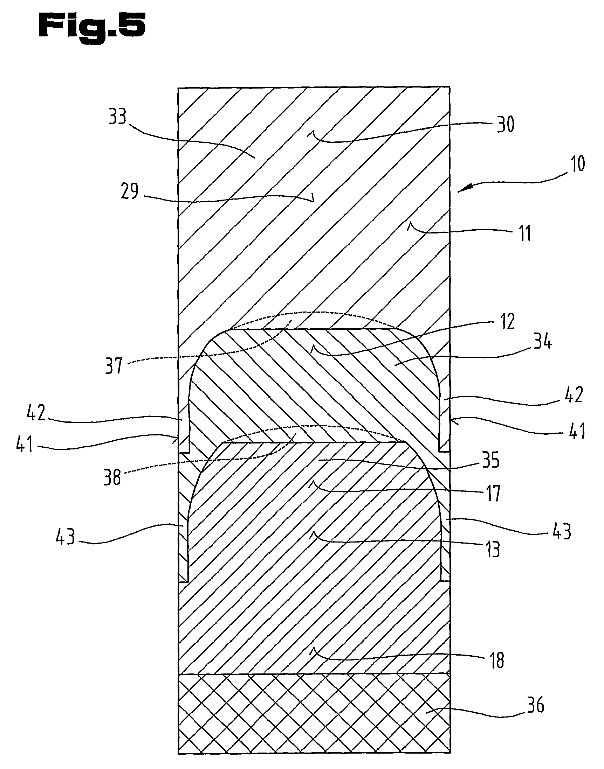

In der Fig. 5 ist die Bespannung 10 aus dem Gestrick 11 mit unterschiedlichen Zonen 33 bis 36 in gestreckter, ebenflächiger Lage vereinfacht dargestellt.

In Längserstreckung der Bespannung 10 gesehen ist in dieser Darstellung hier oben der Kopfbereich 30 sowie daran nachfolgend der Schulterbereich 29 dargestellt. Diese bilden die erste Zone 33 für den Kopf, Hals sowie oberen Rücken aus. Anschließend an die erste Zone 33 ist die zweite Zone 34 für den unteren Rücken angeordnet bzw. ausgebildet. Anschließend daran ist der Sitzbereich 13 mit der dritten Zone 35 angeordnet, welche zur Unterstützung des Gesäßbereiches 17 sowie Oberschenkelbereiches 18 dient. Schließlich endet das Gestrick 11 der Bespannung 10 in der vierten Zone 36, welche eine Oberschenkelstütze im Bereich der Kniekehle ausbildet. Durch unterschiedliche Schraffuren sind die einzelnen Zonen 33 bis 36 besser von einander zu unterscheiden. Die geometrische Anordnung sowie Ausbildung der Zonen 33 bis 36 ist hier zur Beispielhaft für eine Fülle von Möglichkeiten gewählt, wobei es vorteilhaft ist, wenn die einzelnen Zonen 33 bis 36 sich im Längsrandbereich 41 der Bespannung 10 übergreifen bzw. überlappen, wie dies hier beispielsweise zwischen den Zonen 33 und 34 sowie 34 und 35 gezeigt ist. Dabei übergreift ein zumeist streifenförmiger Randabschnitt 42; 43 der jeweils vorgeordneten Zone 33; 34 zumindest den Mittelbereich der unmittelbar nachfolgenden Zone 34; 35. Der übergreifende bzw. überlappende Randabschnitt 42 reicht hier in Längserstreckung der Bespannung 10 gesehen bis an die Trennlinie zwischen der der ersten Zone 33 nachfolgenden zweiten und dritten Zone 34, 35 heran. Die zweite Zone 34 mit ihrem Randabschnitt 43 übergreift die dieser nachfolgenden Zone 35 ebenfalls mit einer ähnlichen Längserstreckung, wie dies zuvor für den Randabschnitt 42 der ersten Zone 33 beschrieben worden ist und reicht hier bis in etwa in den Mittelbereich der dritten Zone 35. Übergänge zwischen den streifenförmigen Randabschnitten 42, 43 und dem dazu quer verlaufenden jeweiligen Zonenende sind bevorzugt bogenförmig ausgerundet. Es wäre aber auch ein winkeliger bzw. scharfkantiger Übergang möglich. Gleichfalls wäre auch die Anordnung einer Abschrägung als Übergang denkbar.

Zusätzlich ist es aber auch noch möglich, dass weitere Zonen 37 und/oder 38 zwischen den einzelnen Zonen 33 bis 36 angeordnet bzw. vorgesehen werden können. So ist beispielsweise die fünfte Zone 37 zwischen der ersten Zone 33 und der zweiten Zone 34 angeordnet und bildet eine so genannte Übergangszone aus. Diese Zone 37 erstreckt sich in Querrichtung zur Gestricklängsrichtung gesehen nur über den Mittelbereich und endet vor den Längsrandbereichen 41. Eine sechste Zone 38 ist hier zwischen der zweiten Zone 34 und der dritten Zone 35 angeordnet bzw. ausgebildet. Durch diese zusätzliche Anordnung der weiteren Zonen 37 und/ oder 38 kann das Abstütz- bzw. Einsinkverhalten der Bespannung 10 noch individueller an unterschiedlichste Einsatzbedingungen angepasst werden. Gleichfalls können dadurch spürbare Übergänge zwischen den hoch belasteten Zonen 33, 34; 34, 35 noch besser ausgeglichen bzw. die Übergänge zwischen den Zonen aufeinander feiner abgestimmt werden.

Das die Bespannung 10 bildende Sitztextil ist in seiner Funktionalität u.a. verantwortlich für den Sitzkomfort, die Atmungsaktivität, die Hinterlüftung, die Aufnahme der Körpermasse sowie das Abstützen des sitzenden bzw. liegenden Körpers. Zur optimalen Anpassung der Bespannung 10 an die unterschiedlichen Körperkonturen von Benutzern und um deren Sitzhaltung optimal zu gewährleisten, sind die zuvor beschriebenen, unterschiedlichen verschiedenen Zonen 33 bis 38 vorgesehen, wobei diese zueinander unterschiedliche Eigenschaften in Bezug auf Elastizität, Dehnungsverhalten usw. aufweisen. Es sei hierbei bemerkt, dass es auch möglich ist, sowohl mehr als auch weniger als die zuvor beschriebenen Zonen 33 bis 38 einzusetzen bzw. zu verwenden. Gleichfalls ist die räumliche Ausbildung und Anordnung zueinander nur beispielhaft für eine Fülle von Möglichkeiten gezeigt.

Mit Hilfe der zuvor beschriebenen Flachstricktechnik zur Erzeugung des Gestricks 11 können Massenwaren mit lokal unterschiedlichen Eigenschaften in Kraft- und/oder Dehnungsverhalten hergestellt werden. Nachfolgend werden die einzelnen zuvor beschriebenen Zonen 33 bis 36 für das in der Fig. 5 gezeigte Ausführungsbeispiel näher beschrieben.

Die Beschreibung zur Herstellung des Gestricks 11 bezieht sich dabei auf eine Flachstrickmaschine der Feinheit E9 (das bedeutetet neun Nadeln je englischen Zoll) mit einer Gestrickbreite von bevorzugt über 200 Nadeln, wobei dies von der herzustellenden Gestrickbreite abhängig ist. Im Bereich der Zone 36, also dem Kniebereich, wird das Gestrick 11 in einer dazu reduzierten Breite von bevorzugt unter 200 Nadeln und zumeist noch abnehmend gefertigt. Grundsätzlich erfolgt die Herstellung des Gestricks 11 in einbettiger Strickweise, wobei jedoch der zuvor beschriebene schlauchförmige Rand mit einem zweiten Nadelbett hergestellt wird. Die unterschiedlichen Eigenschaften in den einzelnen Zonen 33 bis 36 bzw. 37 und 38 können vor allem durch die Art und Anzahl der eingesetzten Fadenmaterialien, durch unterschiedliche Maschengrößen sowie unterschiedlicher Maschenanzahl pro gestrickter Einheit realisiert werden. Nachfolgend wird für jede der hier gezeigten Zonen 33 bis 36 eine mögliche Ausführungsform beschrieben.

In der Zone 33 wird als Fadenmaterial lediglich PES eingesetzt. Die Vorspannung des gesamten Gestricks 11 wird durch die geringere Breite der Bespannung 10 bzw. des Textils gegenüber der Breite des Grundrahmens 6 bzw. Bespannungstragrahmens 19 erzielt. Im Übergangsbereich von der ersten Zone 33 hin zur zweiten Zone 34 wird ein dynamischer Verlauf durch systematisch zunehmende Maschengrößen umgesetzt. Die Auflagefläche unter der Kopfstütze 21 sowie der Schulter bei einer schrägen bzw. ruhenden Sitzhaltung wird hingegen mit einer geringeren Maschenlänge gefertigt. Dadurch erreicht man eine geringer elastische und somit festere und straffere Bespannung. Mögliche Kennwerte für die erste Zone 33 sind:

| Material | PES 167dtex f36/1 8 Fäden je Farbe |
|---|---|
| Maschenfestigkeit | 11.8 / 12.0 |
| Warenabzug | 10 |
| Zonenlänge | ca. 270 Strickreihen |
| Zonenbreite | 200 Nadeln |
| Streifenzugversuch nach DIN EN 13934-1 | Fₘₐₓ > 1080 N, und S < 95 % |

Bei diesem Streifenzugversuch wurde eine Gestrickbreite im unbelasteten Zustand von 50 mm bei einer Einspannlänge von 200 mm geprüft und bis zum Bruch bei Fₘₐₓ > 1080 N gedehnt. Die Festigkeit im Streifenzugversuch nach DIN EN 13934-1 soll für diese Zone des Gestricks 11 in einer unteren Grenze von 700 N und einer oberen Grenze von 1400 N liegen.

Je kleiner der angegebene Wert für die Maschenfestigkeit ist, desto fester und straffer wird das Gestrick 11. Bei einem größeren Wert wird das Gestrick 11 weicher und elastischer.

Aufgrund der notwendigen bzw. geforderten Einsinktiefe des Benutzers in den Sitz 1 ist in der zweiten Zone 34 die größte Elastizität des Gestricks 11 notwendig. Dies ist vereinfacht aus der Darstellung der Fig. 4 zu ersehen. Als Fadenmaterial wird hier ausschließlich der bevorzugt mit PES umsponnene Lycrafaden eingesetzt. Über die Anzahl der eingesetzten, einzelnen Fäden sowie der Maschengröße bzw. Maschenweite können diese elastischen Eigenschaften innerhalb der Zone 34 gezielt beeinflusst werden. Mögliche Kennwerte für die zweite Zone 34 sind:

| Material | Lycra (umsponnen mit PES) 2 Fäden erste Farbe 1 Faden zweite Farbe | PES 167dtex f36/1 8 Fäden je Farbe |
|---|---|---|
| Maschenfestigkeit | 11.2 / 11.4 | 11.8 / 12.0 |
| Warenabzug | 10 | 10 |
| Zonenlänge | ca. 115 Strickreihen | ca. 115 Strickreihen |
| Zonenbreite | 126 - 170 Nadeln | 15 - 37 Nadeln |
| Elastizität nach DIN EN 14704-1 | Fₘₐₓ ≈ 22 N, bei S = 100 % | |
| Streifenzugversuch nach DIN EN 13934-1 | | Fₘₐₓ > 1080 N, und S < 95 % |

Bei diesem Streifenzugversuch wurde eine Gestrickbreite im unbelasteten Zustand von 50 mm bei einer Einspannlänge von 200 mm geprüft und bis auf die doppelte Länge von 400 mm gedehnt. Die dafür aufzuwendende Kraft beträgt ca. 22 N. Eine untere Grenze bzw. ein unterer Bereich der Zugkraft beträgt zumeist 10 N und eine obere Grenze bzw. ein oberer Bereich 40 N für die Verlängerung des Probestreifens um 100%.

Die weitere in der Fig. 5 dargestellte dritte Zone 35 bildet den Sitzbereich 13 und somit die Sitzfläche des Sitzes 1 aus. Diese Sitzfläche soll den Eindruck einer gesamten, in sich geschlossenen, durchlaufenden Fläche vermitteln, welche durch das Gestrick 11 gebildet ist. Hier kann als Fadenmaterial ebenfalls PES eingesetzt werden. Um ein "Kippen" der gesamten Zone 35 zu ermöglichen, sind an dem in der Fig. 5 dargestellten linken sowie rechten Längsrandbereich 41 zusätzlich noch stark elastische Bereiche vorgesehen, welche in der Fig. 5 mit dem Bezugszeichen 43 für die Randabschnitte bezeichnet sind. Diese können in Richtung der Längserstreckung des Gestricks 11 gesehen, beliebig breit sowie gegebenenfalls mit unterschiedlicher Breite ausgebildet sein. Die Randabschnitte 43 können einen keilförmigen Längsverlauf aufweisen. Diese gewährleisten somit eine Sitzflächenausrichtung der Sitzkontur bzw. Körperkontur 32 entsprechend einem Anstellwinkel 48 - siehe Fig. 4 - bezüglich dem Grundrahmen 6 bzw. Bespannungstragrahmen 19 im Sitzflächenbereich, insbesondere dem Sitzbereich 13. Dieser Anstellwinkel 48 kann aus einem Winkelbereich mit einer unteren Grenze von 5°, insbesondere 10°, bevorzugt 15° und einer oberen Grenze von 45°, insbesondere 35°, bevorzugt 20° gewählt werden. Mögliche Kennwerte für die dritte Zone 35 sind:

| Material | PES 167dtex f36/1 8 Fäden je Farbe | Elastan umsponnen 2 Fäden je Farbe |
|---|---|---|
| Maschenfestigkeit | 12.4 / 12.6 | 12.6 / 12.4 |
| Warenabzug | 10 | 10 |
| Zonenlänge | ca. 240 Strickreihen | ca. 220 Strickreihen |
| Zonenbreite | 126 -170 Nadeln | je 15 - 37 Nadeln |
| Streifenzugversuch nach DIN EN 13934-1 | Fₘₐₓ > 1170 N, und S < 96 % | - |

Bei diesem Streifenzugversuch wurde eine Gestrickbreite im unbelasteten Zustand von 50 mm bei einer Einspannlänge von 200 mm geprüft und bis zum Bruch bei Fₘₐₓ > 1170 N gedehnt. Die den Sitzbereich 13, insbesondere die Sitzfläche bildende Zone 35 soll eine Festigkeit im Streifenzugversuch nach DIN EN 13934-1 in einer unteren Grenze von 800 N und einer oberen Grenze von 1500 N aufweisen.

Die Angaben aus der ersten Spalte beziehen sich auf die in der Fig. 5 dargestellte Zone 35. Die weiteren Angaben gemäß der zweiten Spalte beziehen sich auf die beiden in den Längsrandbereichen ausgebildeten Randabschnitte 43.

Schließlich wird mit der vierten Zone 36 der Sitzbereich 13 bzw. die Sitzfläche des Sitzes 1 in Richtung des Kniebereiches des Benutzers von diesem abgegrenzt. Diese Zone 36 soll ein Herausrutschen aus dem Sitz 1 entlang des Längsverlaufs des Grundrahmens 6 bzw. Bespannungstragrahmens 19 aus dem Sitzbereich 13 verhindern. Die vierte Zone 36 besitzt eine sehr hohe Vorspannung in Querrichtung des Gestricks 11, welche auch noch durch eine zusätzliche Reduzierung der Gestrickbreite des Gestricks 11 in der ungespannten Ausgangsstellung erreicht wird. In dieser Zone 36 wird als Fadenmaterial ausschließlich PES eingesetzt. Mögliche Kennwerte für die vierte Zone 36 sind:

| Material | PES 167dtex f36/1 8 Fäden je Farbe |
|---|---|
| Maschenfestigkeit | 11.7 / 11.7 |
| Warenabzug | 10 |
| Zonenlänge | ca. 90 Strickreihen |
| Zonenbreite | ca. 192 Nadeln (bevorzugt abnehmend) |
| Festigkeit | maximal, da das Gestrick hier zweilagig vorliegt |

Zur Erhöhung der Festigkeit der vierten Zone 36 wird hier das Gestrick 11 zweilagig ausgebildet, wodurch für den Benutzer eine Art Schwelle bzw. Wall gegen das Herausrutschen geschaffen wird.

Diese zuvor angegebenen Werte beziehen sich auf eine Gestrickgröße im aufgespannten Zustand und gestreckter Lage in der Gestricklängsrichtung von ca. 500 mm Breite und ca. 1200 mm Länge.

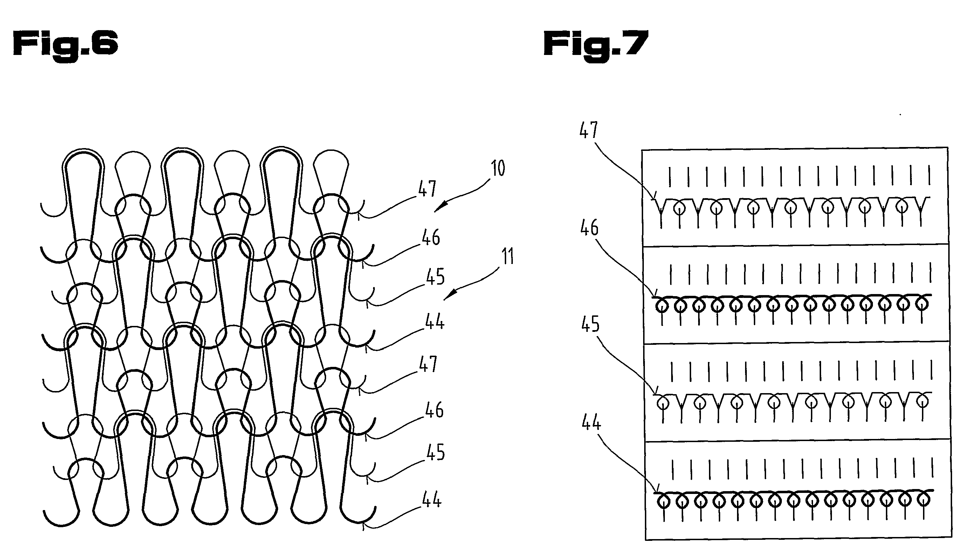

In den Fig. 6 und 7 ist eine schematische Bindungsansicht von einzelnen Fäden 44 bis 47 sowie eine bindungstechnische Darstellung für eine mögliche Ausführungsform des Gestricks 11 vereinfacht dargestellt. Dabei werden alle Zonenübergänge und Abgrenzungen durch entsprechend angepasste Maschengrößen dynamisch verlaufend gestaltet. Im Randbereich des gesamten Gestricks 11 wird umlaufend ein Schlauch gestrickt, welcher zur Aufnahme eines Befestigungsmittels dient. Dieses wird bevorzugt durch einen Flachkeder bzw. ein Flachkederprofil gebildet. Das Befestigungsmittel in Verbindung mit dem Gestrick 11 bildet somit die Schnittstelle bzw. die Halterung zwischen dem Grundrahmen 6 bzw. Bespannungstragrahmens 19 und der Bespannung 10. Zusätzlich ist es möglich, im Bereich zwischen dem Kederschlauch und dem Sitz- bzw. Rückenlehnengestrick dieses im Bereich einer möglichen Rahmenberührung zusätzlich stricktechnisch noch zu verstärken, um etwaigen Beschädigungen vorzubeugen.

In den Fig. 6 und 7 sind die Fäden 44 bis 47 zur Bildung des Gestricks 11 dargestellt. Dabei sei bemerkt, dass der Strick- und Fadenverlauf der einzelnen Fäden 44 bis 47 nur beispielhaft für eine Vielzahl von möglichen Strickausführungen gewählt wurde und die Strickausführung an unterschiedlichste Einsatzbedingungen angepasst sowie variiert werden kann. Gleichfalls ist auch die Bindung der einzelnen Fäden 44 bis 47 untereinander durch andere als die hier gezeigten Fadenverläufe möglich.

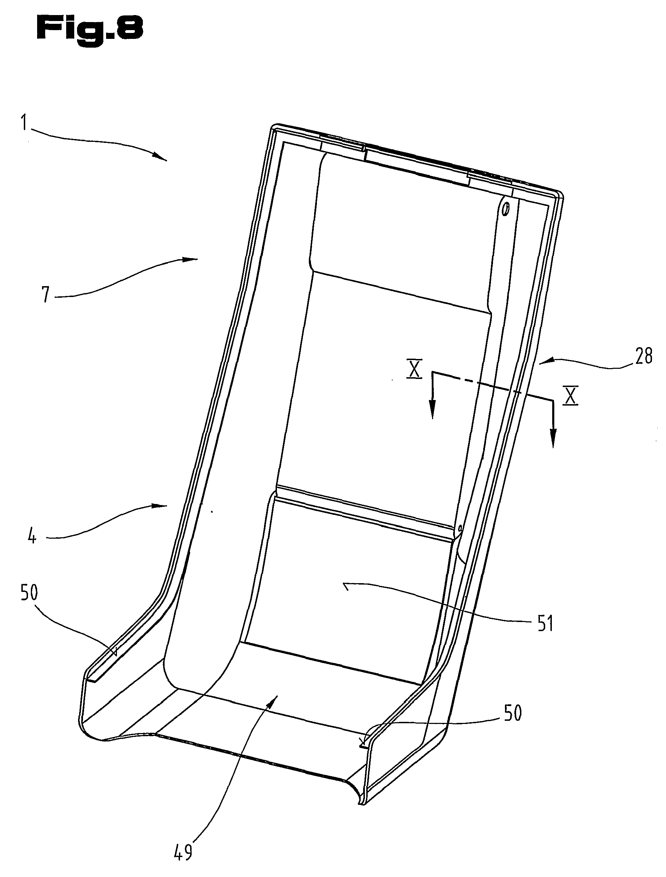

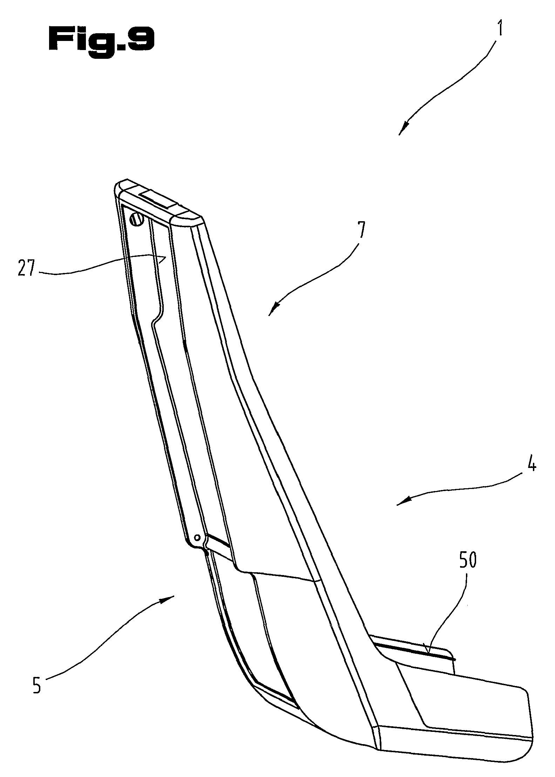

In den Fig. 8 bis 10 ist eine mögliche Ausbildung des Verkleidungselements 7 für die Rückseite 5 des Sitzes 1 gezeigt, wobei wiederum, um unnötige Wiederholungen zu vermeiden, auf die detaillierte Beschreibung in den vorangegangenen Fig. 1 bis 7 hingewiesen bzw. Bezug genommen wird. Gleichfalls werden für gleiche Teile gleiche Bezugszeichen sowie Bauteilbezeichnungen wie in den vorangegangenen Fig. 1 bis 7 verwendet.

Das hier gezeigte Verkleidungselement 7 wird bevorzugt mit dem hier nicht näher dargestellten Traggestell 2 zu einer Baugruppe verbunden und bildet eine Aufnahme- bzw. Stützeinheit für den Grundrahmen 6 bzw. Bespannungstragrahmen 19 sowie weiterer zuvor bereits beschriebener Komponenten. Bevorzugt wird das Verkleidungselement 7 als selbsttragende, in sich steife Konstruktion ausgebildet, wobei hier die unterschiedlichsten Formgebungsverfahren sowie Werkstoffe Verwendung finden können. Der eingesetzte Werkstoff kann aus der Gruppe von Kunststoffen, laminierter und/oder faserverstärkter Kunststoffe, beispielsweise mit Glasfasern, Karbonfasern, Metallen, insbesondere Leichtmetallen usw. gewählt werden. Gleichfalls ist aber auch eine beliebige Kombination von unterschiedlichen Werkstoffen möglich. Es können aber auch Matten, Geflechte, Gestricke oder Gewebe in den Kunststoff eingebettet oder aber auch nur an diesen angeformt sein. Das Verkleidungselement 7 kann durch die unterschiedlichsten Herstellungsverfahren gefertigt werden, wobei der dabei ausgebildete bevorzugt schalenartige Aufbau auch zur Lastabtragung ausgehend vom Benutzer hin auf das Traggestell 2 dient. Weiters dient die Formgebung des Verkleidungselements 7 auch noch dazu, den Freiraum zwischen unmittelbar hintereinander angeordneten Sitzen 1 festzulegen. Durch die aus dem Gestrick 11 gebildete Sitzauflage könnte ansonst ein ungewollter KörperKontakt zwischen den Benutzern von hintereinander angeordneten Sitzen 1 erfolgen. Gleichfalls wird aber das Verkleidungselement 7 auch als Tragkonstruktion bzw. zur Aufnahme der Armlehnen 20, der Kopfstütze 21, des oder der Anzeigelemente 22, des Tisches 23 sowie des Aufnahme- und Halteelements 24, 25 dienen.

Dadurch, dass zwischen den beiden zuvor beschriebenen Sitzpositionen keinerlei Verstellung des Grundrahmens 6, insbesondere der Rückenlehne 28, in Bezug zur Vertikalen 15 für die Veränderung der gewünschten Sitzposition durchzuführen ist, kann hier mit geringsten Aufwand die Aufnahme des Grundrahmens 6 und/oder Bespannungstragrahmens 19 im Verkleidungselement 7 erfolgen. An einer Aufnahmeseite 49 des Verkleidungselements 7 sind an der Benutzerseite 4 im Seitenrandbereich des schalenartig ausgebildeten Verkleidungselements 7 Stützelemente 50 angeordnet. Das oder die Stützelemente 50 dienen dazu, den zuvor bereits und später noch detaillierter beschriebenen Grundrahmen 6 für die Lastabtragung abzustützen. Bei dieser hier gezeigten Ausführungsvariante dient bereits der Grundrahmen 6 zur Halterung der Bespannung 10 und wird bedarfsweise lösbar am Verkleidungselement 7, insbesondere am Stützelement 50, gehaltert. Dadurch wird es für Reinigungspersonal bzw. Servicepersonal auf einfache Art und Weise möglich, verschmutzte oder beschädigte Bespannungen 10 mitsamt dem Grundrahmen 6 vom Verkleidungselement 7 abzunehmen und eine neue, bereits vormontierte Bespannung 10 gemeinsam mit dem Grundrahmen 6 wieder in das Verkleidungselement 7 zur Komplettierung des Sitzes 1 einzusetzen.

Im hier oben dargestellten Bereich des Verkleidungselements 7 ist weiters eine Aufnahme bzw. Halterung der später noch näher beschriebenen Kopfstütze 21 vorgesehen. In der zentral verlaufenden Vertiefung 17 an der Rückseite 5 des Verkleidungselements 7 sind verschiedene Kupplungsvorrichtungen zum Haltern des Anzeigeelements 21, des Tisches 22 sowie des Aufnahme- sowie Halteelements 24, 25 vorgesehen.

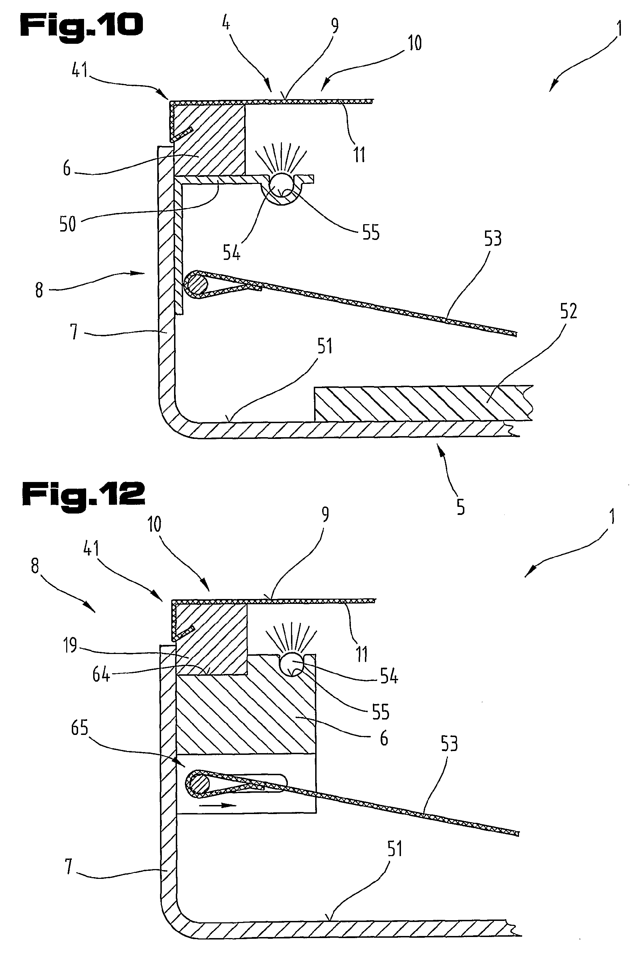

Eine Innenfläche 51 des Verkleidungselements 7 ist im Bereich der Aufnahmeseite 49 durch einen Zwischenraum distanziert von der Bespannung 10 angeordnet, wie dies vereinfacht in der Fig. 10 dargestellt ist. Dieser Zwischenraum zwischen der Bespannung 10 und der Innenfläche 51 des Verkleidungselements 7 dient zur Aufnahme des Körpers des Benutzers, wie dies durch die Körperkontur 32 in der Fig. 4 vereinfacht dargestellt ist.

Weiters dient dieser Zwischenraum auch noch zur Aufnahme abgestrahlter Wärme des Benutzers, welche durch das Gestrick 11 hindurch einfach in diesen abgestrahlt bzw. abgegeben und von dort gegebenenfalls auch noch zusätzlich abgeleitet werden kann. Dadurch, dass die Bespannung 10 aus dem Gestrick 11 gebildet ist, stützt dieses nicht nur den Körper des Benutzers optimal ab, sondern erlaubt auch eine ausreichende Wärme- sowie Feuchtigkeitsabfuhr und damit verbunden eine gute Hinterlüftung des gesamten Sitzes 1.

Dadurch, dass als Sitzauflage die aus dem Gestrick 11 gebildete Bespannung 10 anstatt von bisher üblichen Sitzpolstern aus unterschiedlichsten Schaumkunststoffen, welche auf einer Tragstruktur abgestützt sind, gewählt wird, ist dieser Zwischenraum zwischen der Bespannung 10 und der Innenfläche 51 vorzusehen. Um auch für schwerere Personen einen angenehmen Sitzkomfort zu ermöglichen und die Gefahr der Berührung der Person an der Innenfläche 51 des Verkleidungselements 7 zu vermeiden, ist es möglich, eine Zwischenlage 52 an der Innenfläche 51 des Verkleidungselements 7 vorzusehen. Diese Zwischenlage 52 kann aus einem Kunststoffschaum gebildet sein, an welchem nach entsprechender Verformung der Bespannung 10 durch den Benutzer dieser dort zur Anlage kommt. Damit wird ein direktes hartes Aufliegen am Verkleidungselement 7 verhindert. Diese Zwischenlage 52 kann in ihren Eigenschaften an die unterschiedlichsten Einsatzbedingungen angepasst werden. Auf alle Fälle ist darauf zu achten, dass der dabei verwendete Schaumkunststoff bevorzugt flammhemmend ausgerüstet ist. Diese Flammhemmung kann durch unterschiedlichste Beigaben bzw. Beimischungen in das Schaumgerüst in bekannter Art und Weise erfolgen. Ebenfalls ist auch eine Imprägnierung bzw. Beschichtung mit flammhemmenden Materialien sowie gegebenenfalls ein Überzug mit einer flammhemmend ausgerüsteten Umhüllung möglich.

Unabhängig davon wäre es aber auch noch möglich, an vordefinierten Positionen des Sitzes 1 innerhalb des Verkleidungselements 7 einen oder aber auch mehrere Stützgurte 53 vorzusehen, welche quer zur Längserstreckung des Sitzes 1 bzw. der Längsrandbereiche 41 innerhalb des Verkleidungselements 7 verlaufend angeordnet sind. Dieser Stützgurt 53 weist bevorzugt eine geringere Elastizität als die Bespannung 10 auf, und dient dazu, bei zu starker Verformung der Bespannung 10 durch den Benutzer in den höchst belasteten Bereichen des Sitzes 1 einen Kontakt mit dem Verkleidungselement 7, insbesondere der Innenfläche 51, zu verhindern. So wird bei der Benutzung zuerst die Bespannung 10 soweit verformt bzw. gedehnt, dass ein Anliegen der Körperkontur 32 am Stützgurt 53 erfolgt und dieser in weiterer Folge zur Abtragung der Stützlast des Körpers des Benutzers unterstützend zur Bespannung 10 wirkt. Dazu ist der Stützgurt 53 in Richtung seiner Längserstreckung mit einer bevorzugt geringeren Elastizität gegenüber der Bespannung 10 auszubilden. Eine Kombination des Stützgurts 53 mit der Zwischenlage 52 ist dabei auch möglich.

Einer dieser Stützgurte 53 kann auch am Ende des Oberschenkelbereiches 18 hin zum Kniekehlenbereich unterhalb der Bespannung 10 am Grundrahmen 6 und/oder Bespannungstragrahmen 19 angeordnet sein. Dieser dient dazu, das Herausrutschen des Benutzers aus dem Sitz 1 während der Benutzung zu erschweren bzw. verhindern. Damit wird in der vierten Zone 36 das bereits straff ausgebildete Gestrick 11 zusätzlich noch verstärkt.

In der Fig. 10 ist im Bereich des am Verkleidungselement 7 angeordneten Stützelements 50 ein an diesem angeordnetes bzw. daran gehaltertes Leuchtmittel 54 vereinfacht dargestellt. Dieses Leuchtmittel 54 kann zum besseren Schutz sowie der Halterung beispielsweise in einer nutförmigen Vertiefung 55 des Stützelements 50 angeordnet sein. Dazu kann das Leuchtmittel 54 dem Grundrahmen 6 benachbart sowie innerhalb seiner Umgrenzung angeordnet sein. Weiters kann das Leuchtmittel 54 beispielsweise durch mehrere einzelne Lichtpunkte bzw. aber auch durch einen durchlaufend ausgebildeten und sichtbares Licht abgebenden Lichtleiterstrang gebildet sein. Dadurch, dass das Gestrick 11 durch eine Vielzahl von Maschen gebildet ist, wird auf alle Fälle ein Durchscheinen des abgegebenen Lichts der Leuchtmittel 54 erfolgen. Diese Leuchtmittel 54 können sich entlang des Längsrandbereichs 41 erstrecken bzw. dort angeordnet sein. Eine dazu quer verlaufende Anordnung im Bereich der Kopfstützen 21 und/oder des Kniebereiches ist dabei aber auch möglich. Diese Leuchtmittel 54 können beispielsweise dazu dienen, um bei abgedunkelter Fahrgastkabine dem Benutzern seinen Sitz 1 besser erkenntlich zu machen. Wird als Leuchtmittel 54 beispielsweise ein Glasfaserkabel verwendet, kann dieses derart ausgebildet sein, dass dieses an seiner äußeren Oberfläche das Licht abgibt bzw. ausstrahlt. Die Einspeisung des Lichtes kann dabei mittels einer hier nicht näher dargestellten Versorgungseinheit erfolgen, welche im Bereich des Traggestells 2 angeordnet bzw. vorgesehen sein kann.

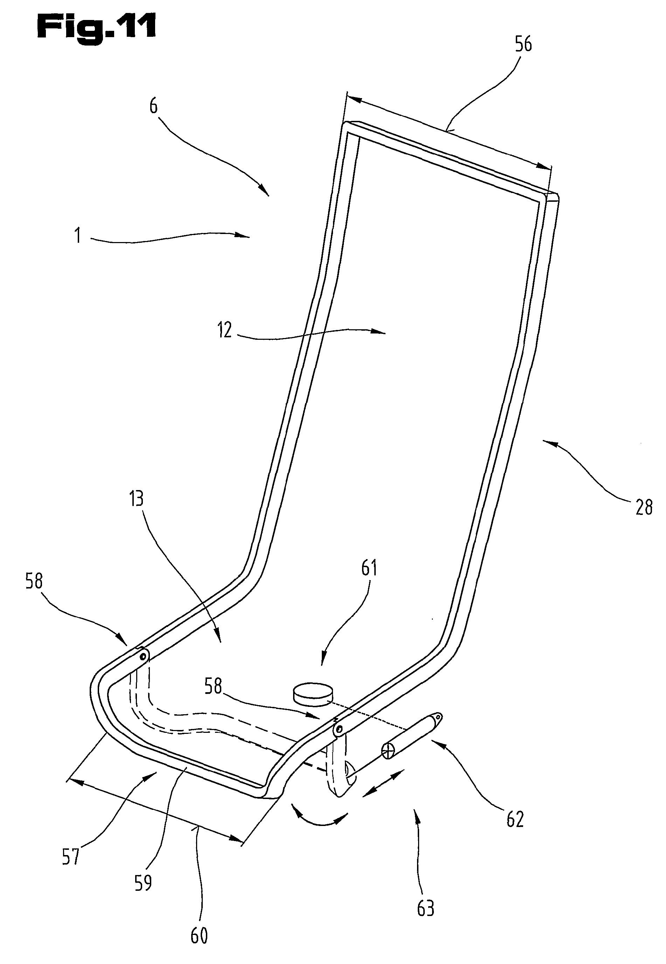

In der Fig. 11 ist eine mögliche Ausbildung des Grundrahmens 6 zur Bildung des Sitzes 1 gezeigt. Auf diesem Grundrahmen 6 kann, wie bereits zuvor beschrieben, die Bespannung 10 aufgespannt sein. Bevorzugt wird der Grundrahmen 6 aus einem Leichtmetall oder einem hochfesten Kunststoffmaterial gebildet, welches ausreichende Festigkeiten aufweist, um eine Lastabtragung bei ausreichender Stabilität zu gewährleisten. Der die Rückenlehne 28 bildende Abschnitt des Grundrahmens 6 weist hier über seinen gesamten Längsverlauf eine einheitliche Breite 56 auf. Dadurch wird auch die Gestaltung des Verkleidungselements 7 vereinfacht und bei unmittelbar nebeneinander angeordneten Sitzen 1 störende Freiräume vermieden. Die Breite 56 entspricht dabei den üblichen Sitzabmessungen bzw. Mindestabmessungen für den jeweiligen Einsatzfall.

Wie bereits zuvor beschrieben, ist der vordere Sitzabschnitt 57 des Sitzbereichs 13 zur Verkürzung der Sitzfläche verstellbar ausgebildet. Um diese Verstellung durchführen zu können, ist beidseits des Sitzbereichs 13 des Grundrahmens 6 jeweils eine Gelenkanordnung 58 vorgesehen. Mit dieser ist es möglich, einen Rahmenteil 59 von seiner Gebrauchsposition in seine Bereitschaftsposition zu verschwenken. Durch dieses Abklappen erfolgt eine längenmäßige Verkürzung des Sitzbereiches 13, wobei es aber stets möglich ist, auch auf dieser verbleibenden Restfläche Platz zu nehmen. Die abgeklappte Stellung ist in strichlierten Linien gezeigt.

Um ein Einschwenken des verschwenkbaren Rahmensteils 59 innerhalb des Verkleidungselements 7 zu ermöglichen, weist dieser eine gegenüber der Breite 56 des übrigen Grundrahmens 6 dazu geringere Breite 60 auf. Die Darstellung des abgeklappten Sitzabschnittes in der so genannten Bereitschaftsposition ist bereits zuvor in der Fig. 2 gezeigt und beschrieben worden. Die hochgeklappte Stellung und damit die Gebrauchsposition des Sitzes 1 ist in der Fig. 1 dargestellt und beschrieben worden.

Um zu vermeiden, dass der Benutzer wissentlich einen Betätigungsvorgang einleiten muss, um die Verstellung des oberen Sitzabschnitts 57 durchzuführen, soll dies automatisiert und selbsttätig erfolgen. Dazu soll die vom Benutzer in den Sitzbereich 13 eingebrachte Gewichtskraft jenen Zeitpunkt darstellen, zu welchem die Verstellbewegung und somit das Hochklappen des vorderen Sitzabschnitts 57 in die Gebrauchsposition erfolgt. Nimmt also der Benutzer am Sitz 1 Platz, erfolgt eine Verformung der Bespannung 10. Dieses Platznehmen bzw. Hineinsitzen wird durch eine im Sitzbereich 13 vereinfacht dargestellte Erfassungsvorrichtung 61 registriert. Diese Erfassungsvorrichtung 61 kann durch eine Sensorik beispielsweise auf mechanischem oder elektronischem Wege gebildet sein. Die Erfassungsvorrichtung 61 steht weiters mit einer ebenfalls vereinfacht dargestellten Stellvorrichtung 62 in Leitungsverbindung, welche ihrerseits mit dem verschwenk- bzw. verstellbaren vorderen Sitzabschnitt 57 in Verbindung steht. Dabei sei bemerkt, dass die dargestellte Erfassungsvorrichtung 61 sowie Stellvorrichtung 62 nur schematisch vereinfacht dargestellt sind und durch beliebige, aus dem Stand der Technik bekannte Bauelemente bzw. Einrichtungen gebildet werden können. Die Erfassungsvorrichtung 61 sowie die damit in Wirkverbindung stehende Stellvorrichtung 62 bilden eine Betätigungseinrichtung 63 für den Sitzabschnitt 57 aus.

Als Bauteile zur Bildung der Stellvorrichtung 62 können beispielsweise die unterschiedlichsten Zylinder, Schrittmotore, elektrische, pneumatische oder hydraulische Stellantriebe usw. Verwendung finden. Die Wirkverbindung zwischen der Erfassungsvorrichtung 61 und der Stellvorrichtung 62 kann ebenfalls durch unterschiedlichste Medien, wie beispielsweise mechanisch, elektrisch, pneumatisch, hydraulisch usw. erfolgen.

Hat nun die Erfassungsvorrichtung 61 das Platznehmen eines Benutzers am Sitz 1 registriert, wird die Stellvorrichtung 62 aktiviert, welche die Schwenkbewegung des Sitzabschnitts 57 von der abgeklappten Stellung hin in die normale Gebrauchslage durchführt. Durch dieses Hochschwenken erfolgt eine Verlängerung des Sitzbereiches 13, wodurch eine noch bessere Unterstützung des Oberschenkelbereiches hin zum Kniekehlenbereich für den am Sitz 1 sitzenden Benutzer erfolgt.

Verlässt der Benutzer den Sitz 1 und erhebt sich von diesem, wird dies ebenfalls von der Erfassungsvorrichtung 61 registriert und es erfolgt selbsttätig die Verkleinerung der Sitzfläche des Sitzbereichs 13, wodurch ein größerer Freiraum für das Verlassen des Sitzes 1 bzw. der daraus gebildeten Sitzreihe ermöglicht wird.

In der Fig. 12 ist eine weitere mögliche und gegebenenfalls für sich eigenständige Ausbildung des Sitzes 1, insbesondere der Halterung der Bespannung 10 am Verkleidungselement 7 gezeigt. Um unnötige Wiederholungen zu vermeiden, wird auf die detaillierte Beschreibung in den vorangegangenen Figuren hingewiesen bzw. Bezug genommen. Gleichfalls werden für gleiche Bauteile die gleichen Bezugszeichen sowie Bauteilbezeichnungen wie in den vorangegangen Fig. 1 bis 11 verwendet.

Der in der Fig. 12 dargestellte Teilbereich des Sitzes 1 entspricht in seiner Ansicht jener Darstellung gemäß der zuvor detailliert beschriebenen Fig. 10. Im Gegensatz dazu wird hier auf die Anordnung des Stützelements 50 zur Halterung des Grundrahmens 6 verzichtet.

Bei diesem hier gezeigten Ausführungsbeispiel ist der Grundrahmen 6 mit dem Verkleidungselement 7 zu der Stützeinheit 8 verbunden, wodurch eine ausreichende Eigensteifigkeit dieser Baugruppe erzielbar ist. Die Stützeinheit 8, insbesondere das Verkleidungselement 7, ist wiederum mit dem hier nicht näher dargestellten Traggestell 2 zur Bildung des Sitzes 1 verbunden.

Die Bespannung 10 ist auf den Bespannungstragrahmen 19 aufgespannt. Dadurch wird wiederum die Möglichkeit geschaffen, die Bespannung 10 gemeinsam mit dem Bespannungstragrahmen 19 von der Stützeinheit 8 für die Zwecke der Reinigung bzw. den Austausch von der Stützeinheit 8 auf einfache Art und Weise entfernen und wieder montieren zu können. Somit kann wiederum das Putz- bzw. Servicepersonal rasch einen Wechsel der Bespannung 10 durchführen, wobei die Reinigung bzw. der Wechsel der Bespannung 10 an einem vom Sitz 1 entfernten eigenen Ort erfolgt. Der Bespannungstragrahmen 19 weist wiederum entsprechend ausgebildete Haltevorrichtungen für die Befestigung der Bespannung 10 auf. Da in diesem Ausführungsbeispiel der Bespannungstragrahmen 19 in seiner eingebauten Stellung am Grundrahmen 6 der Stützeinheit 8 abgestützt ist, kann dieser in seiner Stabilität und Dimension geringer als der Grundrahmen 6 ausgeführt werden.

Um den Bespannungstragrahmen 19 einfach am Grundrahmen 6 befestigen und dort halten zu können, ist es vorteilhaft, wenn der Grundrahmen 6 eine Ausnehmung 64 an der der Seitenwand des Verkleidungselements 7 zugewendeten Seite aufweist, in welcher der Bespannungstragrahmen 19 von der Benutzerseite her eingesetzt werden kann. Auf die Darstellung von eigenen Befestigungsmitteln zwischen dem Grundrahmen 6 und dem Bespannungstragrahmen 19 wurde der besseren Übersichtlichkeit halber verzichtet.

Weiters ist hier noch vereinfacht dargestellt, dass im Grundrahmen 6 wiederum Leuchtmittel 54 angeordnet bzw. vorgesehen sein können, welche in der Vertiefung 55 angeordnet sind. Zur Vermeidung eines Kontaktes bzw. einer Berührung des Leuchtmittels 54 mit einem Benutzer bei sich am Sitz 1 befindlicher Stellung, ist das Leuchtmittel 54 bzw. deren Aufnahme von der Bespannung 10 hin in Richtung zur Innenfläche 51 des Verkleidungselements 7 distanziert angeordnet.

Um für den zusätzlich angeordneten Stützgurt 53 eine Änderung der von ihm erzeugten Abstützkraft zu ermöglichen, ist hier diesem noch eine vereinfacht dargestellte Verstellvorrichtung 65 im Bereich des Grundrahmens 6 bzw. Verkleidungselements 7 zugeordnet. Diese Verstellvorrichtung 65 kann beispielsweise nur an einem Ende des Stützgurts 53 oder aber auch an beiden Enden desselben vorgesehen sein. Auf die Darstellung der Betätigung der Verstellvorrichtung 65 wurde der besseren Übersichtlichkeit halber verzichtet, wobei dies frei nach dem bekannten Stand der Technik wählbar ist.

Durch die Anordnung der Verstellvorrichtung 65 ist es möglich, den Abstand zwischen dem Stützgurt 53 in der unbelasteten Stellung bezüglich der Bespannung 10 zu verändern. Wird die Distanz verkleinert, wird auch jener Weg verkleinert, über welchen die Bespannung 10 durch die Benutzung hin zum Stützgurt 53 verformt werden kann, bevor der Stützgurt 53 die weitere Abstützwirkung übernimmt. Je kürzer dieser Verformungsweg ist, desto rascher kommt der Stützgurt 53 zur Wirkung, wodurch das Abstützverhalten des Sitzes 1 individuell an den Benutzer angepasst werden kann. Je kürzer der Weg und straffer der Stützgurt 53 ausgebildet ist, desto fester und härter wird das Sitzempfinden.

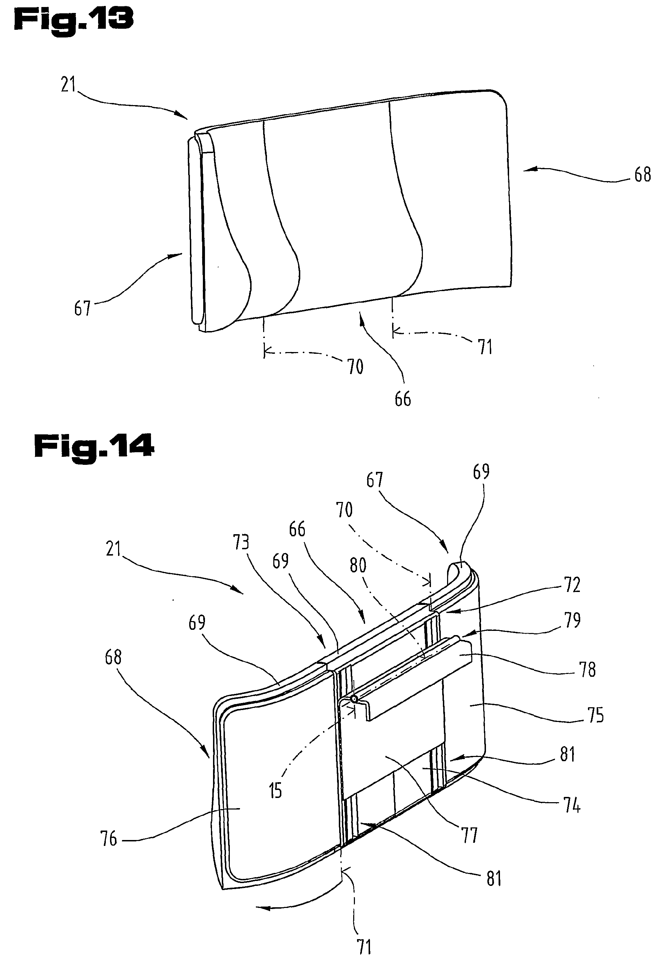

In den Fig. 13 und 14 ist die Kopfstütze 21 für den Sitz gezeigt. Für gleiche Teile werden hier gleiche Bezugszeichen bzw. Bauteilbezeichnungen, wie in den vorangegangenen Fig. 1 bis 12 verwendet. Gleichfalls wird, um unnötige Wiederholungen zu vermeiden, auf die detaillierte Beschreibung in den vorangegangen Fig. 1 bis 12 hingewiesen bzw. Bezug genommen.

Die Kopfstütze 21 ist im oberen Bereich des Verkleidungselements 7 bzw. der Stützeinheit 8 angeordnet und bevorzugt mit dem Verkleidungselement 7 kuppelbar verbunden. Die Kopfstütze 21 weist bei diesem hier gezeigten Ausführungsbeispiel einen Zentralteil 66 sowie beidseits daran angeordnete sowie mit diesem verbundene Seitenteile 67, 68 auf. Bevorzugt ist an der dem Benutzer zugewandte Seite zur Abstützung des Kopfes eine vereinfacht dargestellte Polsterung 69 angeordnet. Die beiden Seitenteile 67, 68 sind durch jeweils in der normalen Gebrauchsposition in etwa vertikal ausgerichtete Schwenkachsen 70, 71 von Gelenkanordnungen 72, 73 gemäß eingetragenen Pfeilen verschwenkbar gelagert. Dadurch wird es für einen Benutzer dieser Kopfstütze 21 möglich, die beiden Seitenteile 67, 68 seitlich des zentralen Teils 66 hin in Richtung zum Kopf des Benutzers zu verschwenken, um so eine schalenförmige Abstützung zu erzielen. Dadurch kann in der Ruheposition auch der Schläfenbereich des Kopfes bequem an der Kopfstütze 21 abgestützt werden.

Die Polsterung 69 der Kopfstütze 21 ist an bevorzugt flächig ausgebildeten Tragelementen 74 bis 76 gehaltert. Diese Tragelemente 74 bis 76 bilden das Grundgerüst der Kopfstütze. Die beiden Gelenkanordnungen 72, 73 zur schwenkbaren Lagerung der beiden Seitenteile 67, 68 sind somit zwischen den Tragelementen 74 und 75 bzw. 74 und 76 angeordnet und können scharnierartig ausgebildet sein. Um einerseits eine ausreichende Stabilität für die Abstützung der verschwenkten Seitenteile 67, 68 zu erzielen und andererseits trotzdem eine Schwenkbewegung relativ zum Zentralteil 66 zu ermöglichen, sind die beiden Gelenkanordnungen 72, 73 entsprechend darauf abzustimmen.

Zur Verstellung der gesamten Kopfstütze 21 ist hier dem Tragelement 74 des Zentralteils 66 eine Traganordnung 77 auf der vom Benutzer abgewendeten Seite zugeordnet. Diese Traganordnung 77 dient dazu, die Kopfstütze 21 mit dem Verkleidungselement 7 und/oder dem Grundrahmen 6 und/oder dem Stützelement 50 zu verbinden. Dazu umfasst die Traganordnung 77 zumindest ein Kupplungselement 78, welches mit einem der Bauteile des Sitzes 1 verbunden bzw. daran gehaltert wird. Zwischen dem Kupplungselement 78 und der Traganordnung 77 ist eine weitere Gelenkanordnung 79 vorgesehen, mit welcher die Traganordnung 77 und in weiterer Folge der Zentralteil 66 mit den daran angeordneten Seitenteilen 67, 68 bezüglich der Vertikalen 15 verschwenkbar ist. Die Gelenkanordnung 79 weist eine Schwenkachse 80 auf, welche bevorzugt horizontal, also parallel zur Aufstandsfläche 3, sowie parallel zu der durch die Bespannung 10 gebildeten Stützfläche 9 ausgerichtet ist. Durch die Schwenkachse 80 der Gelenkanordnung 79 kann eine weitere zusätzliche Ausrichtung und Anpassung der gesamten Kopfstütze 21 an die Wünsche des jeweiligen Benutzers erfolgen. Bevorzugt wird die weitere Schwenkachse 80 unmittelbar benachbart bzw. aber auch der durch die Bespannung 10 gebildeten Stützfläche 9 vorgeordnet. Damit wird erreicht, dass der dem Sitzbereich 13 zugewendete Abschnitt der Kopfstütze 21 in die Bespannung 10 hinein verschwenkt werden kann. Dadurch wird ein fließender Übergang von der belasteten Bespannung 10 hin zur Kopfstütze 21 erzielt.

Um die Kopfstütze 21 an unterschiedliche Größen von Benutzern einstellen zu können, ist hier weiters zwischen der Traganordnung 77 und dem Tragelement 74 des Zentralteils 66 zumindest eine, bevorzugt jedoch mehrere Führungsanordnungen 81 vorgesehen. Diese Führungsanordnungen 81 ermöglichen die gesamte Verstellung der Kopfstütze 21 in Längsrichtung bzw. Längserstreckung der Rückenlehne 28. Durch diese Verstellung ist es möglich, die Distanz zwischen der Auflage an der Kopfstütze 21 und der Stützfläche 9 im Sitzbereich 13 zu verändern. Die Führungsanordnung 81 kann dabei als Längsführung ausgebildet sein und ist bevorzugt jeweils an Randbereichen des Zentralteils 66 angeordnet, welche unmittelbar benachbart den Seitenteilen 67, 68 zugeordnet sind.

Weiters ist es noch möglich, dass im Bereich der Seitenteile 67, 68 und/oder des Zentralteils 66 weitere zusätzliche Bauteile bzw. Komponenten, wie beispielsweise Lautsprecher, Lichtapplikationen usw. angeordnet bzw. vorgesehen sein können. Diese können wahlweise in Abhängigkeit von der geforderten Sitzausstattung und dem damit verbundenen Sitzkomfort des Sitzes 1 eingebaut werden.

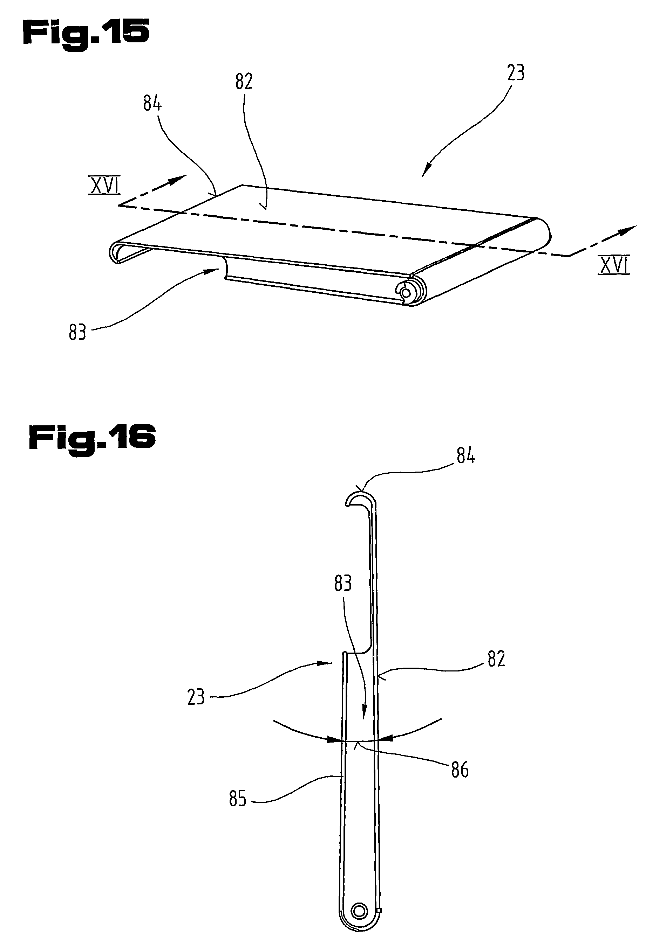

In den Fig. 15 und 16 ist eine Ausführungsform des Tisches 23 gezeigt, wobei wiederum für gleiche Teile gleiche Bezugszeichen bzw. Bauteilbezeichnungen, wie in den vorangegangenen Fig. 1 bis 14 verwendet werden. Um unnötige Wiederholungen zu vermeiden, wird auf die detaillierte Beschreibung in den vorangegangen Fig. 1 bis 14 hingewiesen bzw. Bezug genommen.

Der Tisch 23 weist bei sich in der Gebrauchsstellung befindlichen Lage eine dem Benutzer zugewendete und zum Abstellen verschiedener Gegenstände vorgesehene Tischfläche 82 auf. Um den Tisch 23 zwischen der Gebrauchsposition in der in etwa horizontalen Lage und jener, in der Vertiefung 27 eingeklappten Position verschwenken zu können, ist eine entsprechende Gelenkanordnung vorzusehen.

Auf der von der Tischfläche 82 abgewendeten Seite des Tisches 23 ist zusätzlich noch ein Aufnahmefach 83 vorgesehen. Wie in der in der Fig. 16 dargestellten hochgeklappten Stellung des Tisches 23 zu ersehen ist, ist dem Benutzer des nachfolgenden Sitzes die Tischfläche 82 des Tisches 23 abgewandt und das Aufnahmefach 83 zugewandt. Eine in der Gebrauchsposition dem Benutzer zugewendete Stirnseite 84 des Tisches 23 weist zur leichteren Betätigung und zur Versteifung der Tischfläche 82 eine Abrundung bzw. eine durch diese gebildete Griffmulde auf. Das Aufnahmefach 83 ist an der von der Tischfläche 82 abgewendeten Seite durch eine Fachwand 85 begrenzt. Um in der Gebrauchslage, also der abgeklappten Stellung des Tisches 23 ein Herausfallen von im Aufnahmefache 83 eingebrachten Gegenstände zu vermeiden, ist die Fachwand 85 winkelig zur Tischfläche 82 verlaufend ausgerichtet. Ein Winkel 86 zwischen der Tischfläche 82 und der Fachwand 85 ist dabei verjüngend hin in Richtung auf die Stirnseite 84 ausgerichtet. Durch dieses Zusammenlaufen der Fachwand 85 bezüglich der Tischfläche 82 wird ein Herausfallen von im Aufnahmefach 83 bevorrateten Gegenständen während der abgeklappten Stellung des Tisches 23 vermieden. Dadurch, dass die gesamte Stützeinheit 8 in ihrer Stellung feststehend bezüglich der Aufstandsfläche 3 ausgebildet ist, kann die Ausrichtung der Tischfläche 82 bezüglich der Vertikalen 15 in etwa horizontal erfolgen. Bevorzugt ist die Tischfläche 82 parallel zur Aufstandsfläche 3 in ihrer Gebrauchslage ausgerichtet. In diesem Fall ist dann die Fachwand 85 bezüglich der Aufstandsfläche 3 hin in Richtung auf die Rückseite 5 des Sitzes 1 geneigt.

Zurückkommend auf die Darstellung in den Fig. 1 bis 3 sei noch darauf hingewiesen, dass es im Bereich der Rückseite 5 des Sitzes 1 im Bereich des Aufnahmeelements 24 und/oder Halteelements 25 möglich ist, hier ebenfalls ein Beleuchtungsmittel 87 vorzusehen bzw. anzuordnen. Dabei kann das Beleuchtungsmittel 87 derart angeordnet bzw. ausgebildet sein, dass bei abgedunkelter Fahrgastkabine eine Beleuchtung des unterhalb des Sitzes 1 angeordneten Freiraumes erfolgt. Die Versorgungseinheit für dieses Beleuchtungsmittel 87 kann wiederum im Bereich des Traggestells 2 angeordnet bzw. vorgesehen sein.

Des Weiteren ist es auch noch möglich, das Aufnahmeelement 24 sowie das Halteelement 25 einstückig auszuführen, wobei sich die Längserstreckung zur Aufnahme der Gegenstände bevorzugt über die gesamte Breite 56 des Sitzes 1 erstreckt. Diese Kombination aus Aufnahmeelement 24 sowie Halteelement 25 kann ebenfalls aus einem Gestrick gebildet sein und mit dem Verkleidungselement 7 entsprechend verbunden sein.

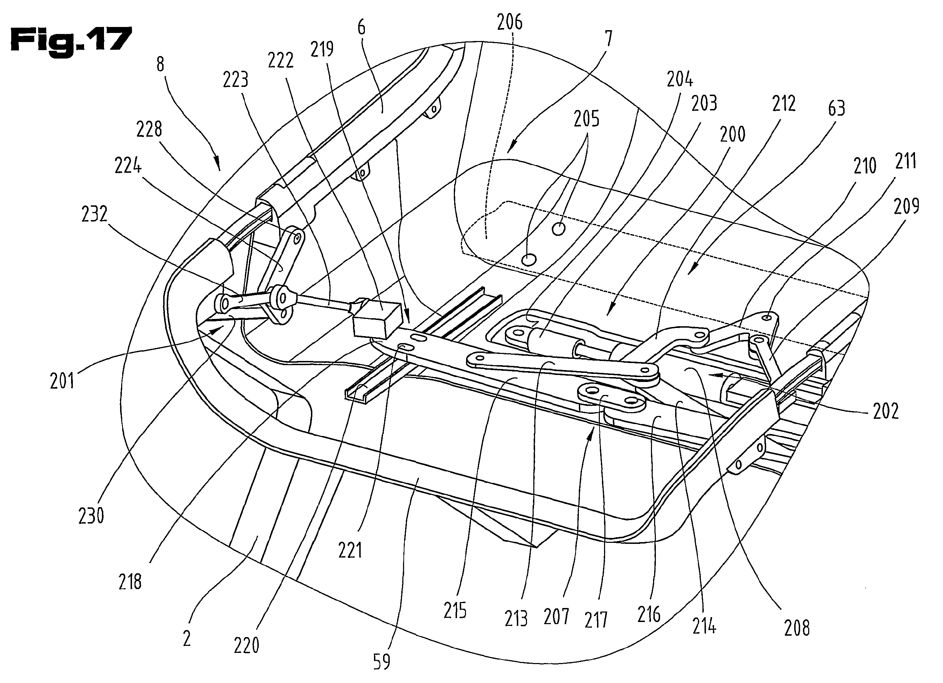

In den Fig. 17 bis 19 ist eine weitere Ausführungsform für die Lagerung, Verstellung und Betätigung des verschwenkbaren Rahmenteils 59 dargestellt, wie dies bereits zuvor in der Fig. 11 beschrieben worden ist.

In Fig. 17 ist die Stützeinheit 8 und zwar ein Teil des Grundrahmens 6 und Verkleidungsele-ments 7 im Sitzbereich 13 sowie ein Teil des Traggestells 2 gezeigt.

In dem unterhalb des Sitzbereiches 13 angeordneten Teil des Verkleidungselements 7 ist die Stellvorrichtung 62 mit einer dieser zugeordneten Übertragungsvorrichtung 200 und einer den verschwenkbaren Rahmenteil 59 lagernden Parallelogrammhebelanordnung 201 gezeigt.

Die Stellvorrichtung 62 ist im vorliegenden Ausführungsbeispiel durch einen Kraftspeicher 202, beispielsweise eine Gasfeder oder ein Druckfluidelement, gebildet. Der Kraftspeicher 202 weist weiters eine fernauslösbare Arretiervorrichtung 203 auf. Weiters ist der Kraftspeicher 202 in einer Vertiefung 204 bzw. einer Ausnehmung des Verkleidungselements 7 versenkt angeordnet. Bevorzugt ist die Vertiefung bzw. Ausnehmung im Verkleidungselement 7 derart angeordnet, dass der Kraftspeicher 202 quer zur Sitztiefe des Sitzes 1 ausgerichtet ist. Es ist aber auch möglich, den Kraftspeicher 202 in Richtung der Sitztiefe oder in einer schräg dazu verlaufenden Lage anzuordnen.

Das Verkleidungselement 7 ist üblicherweise über zwei vereinfacht dargestellte Befestigungsmittel 205 im Übergangsbereich zwischen dem Sitzbereich 13 und dem Rückenbereich 12, wie z.B. hochfeste Schrauben, mit einem nur angedeuteten Zentralträger 206 des Traggestells 2 verbunden. Vorzugsweise ist mit dem, dem Rückenbereich 12 näher liegenden Befestigungsmittel 205 das dem Verkleidungselement 7 zugewandte Ende des Sicherheitsgurts verankert.

Bei der Anordnung des Kraftspeichers 202 senkrecht zur Sitztiefe ist es vorteilhaft, wenn diese Ausnehmung bzw. Vertiefung zwischen dem verstellbaren Rahmenteil 59 und dem das Verkleidungselement 7 lagernden Zentralträger 206, welcher ebenfalls quer zur Sitztiefe auf der dem Traggestell 2 zugewandten Seiten des Verkleidungselements 7 angeordnet ist, vorgesehen ist.

Die Übertragungsvorrichtung 200 ist bei diesem Ausführungsbeispiel durch eine Mehrhebelanordnung 207 gebildet.

Im vorliegenden Ausführungsbeispiel ist die Stellvorrichtung 62 im Bereich ihres kolbenstangenseitigen Endes, in dem sich im vorliegenden Fall auch zweckmäßiger Weise die Arretiervorrichtung 203 befindet, fix mit dem Verkleidungselement 7 bzw. dem Zentralträger 206 verbunden. Ein Zylinder 208 des Kraftspeichers 202 ist in der Vertiefung 204 relativ verschieblich gelagert und ist dessen vom kolbenstangenseitigen Ende abgewendetes Ende über einen Steuerarm 209 mit einem Kniehebel 210 verbunden, der in seinem Knickbereich um eine im Verkleidungselement 7 fix verankerte Gelenkachse 211 verschwenkbar ist.

Der weitere, nicht mit dem Steuerarm 209 verbundene Hebelarm ist mit einem Umlenkhebel 212 schwenkbar verbunden. In dem, dem Kniehebel 210 gegenüberliegenden Endbereich des Umlenkhebels 212 ist dieser mit zwei Steuerhebeln 213, 214 gelenkig verbunden.

Diese Steuerhebeln 213,214 sind auf ihren vom Umlenkhebel 212 abgewendeten Endbereichen schwenkbar mit Schwenkarmen 215,216 gelenkig verbunden.

Die beiden im Wesentlichen quer bzw. schräg zur Sitztiefe ausgerichteten Schwenkarme 215, 216 sind in ihren einander zugewendeten und einander nahe benachbarten Endbereichen in einem Fixlager 217 jeweils unabhängig voneinander verschwenkbar gelagert.

Die von diesem Fixlager 217 abgewendeten Endbereiche 218 der Schwenkarme 215, 216 sind in Gleitschuhen 219, die entlang von Führungsbahnen 220, die in Richtung der Sitztiefe verlaufen, verschiebbar gelagert. Die Gleitschuhe 219 sind hierzu in Längsrichtung der Schwenkarme 215, 216 verlaufenden Langlöchern 221 geführt.

Im Endbereich 218 ist über einen Lagerbock 222, der auch durch den Gleitschuh 219 gebildet sein kann, ein sich im Wesentlichen in Richtung der Sitztiefe erstreckender Verbindungshebel 223 um eine quer zur Sitztiefe verlaufende Achse schwenkbar gelagert.

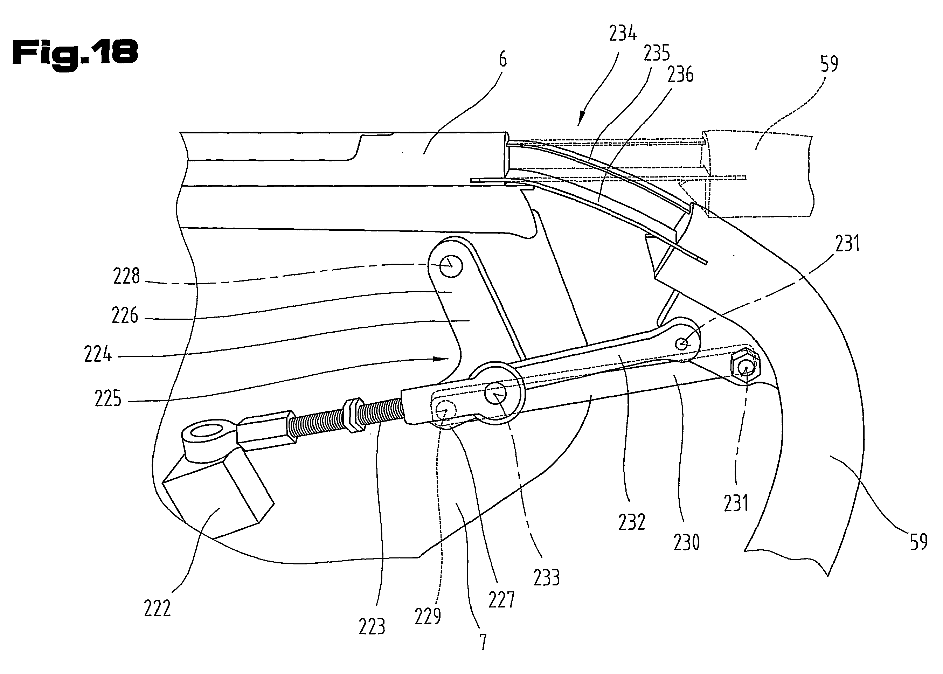

Auf dem vom Lagerbock 222 abgewendeten Ende des Verbindungshebels 223 ist - wie dies nun besser aus Fig. 18 zu ersehen ist - ein Winkelhebel 224 angelenkt. Die Anlenkstelle befindet sich in einem Knickbereich 225 des Winkelhebels 224.

Der Winkelhebel 224 weist seinerseits zwei Schenkel 226, 227 auf, wobei der eine Schenkel 226 in etwa schräg zum Sitzbereich 13 ausgerichtet ist, wogegen der Schenkel 227 sich im Wesentlichen in Richtung der Sitztiefe erstreckt. Der Winkelhebel 224 ist am freien Ende des Schenkels 226 auf einer quer zur Sitztiefe verlaufenden Schwenkachse 228 schwenkbar gelagert.

Diese Schwenkachse 228 bzw. deren Lagerstelle kann am Grundrahmen 6 oder am Bespannungstragrahmen 19 bzw. am Traggestell 2 und/oder am Verkleidungselement 7 angeordnet bzw. verankert sein. Die Schwenkachse 228 für den schwenkbaren Rahmenteil 59 ist dabei bezüglich der Längserstreckung des Grundrahmens 6 und/oder des Bespannungstragrahmens 19 außermittig in Richtung des bodenseitigen Traggestells 2 angeordnet.

Am gegenüberliegenden freien Ende des Schenkels 227 ist eine Drehachse 229 vorgesehen, auf der ein Parallelogrammhebel 230 verstellbar, insbesondere verschwenkbar, angeordnet ist. Das andere freie Ende dieses Parallelogrammhebels 230 ist am Rahmenteil 59 auf einer Gelenkachse 231 drehbar gelagert.

Zur Bildung der Parallelogrammhebelanordnung 201 ist ein weiterer Parallelogrammhebel 232 vorgesehen, der mit einem freien Ende wieder über eine weitere Gelenkachse 231 mit dem verschwenkbaren Rahmenteil 59 verbunden ist. Sein anderer Endbereich ist gelenkig, beispielsweise auf einer Drehachse 233, im Knickbereich des Winkelhebels 224 drehbar gelagert. Diese Drehachse 233 kann vorzugsweise sowohl den Parallelogrammhebel 232 als auch den Verbindungshebel 223 lagern. Es können jedoch auch getrennte Drehachsen 233 für diese beiden Hebel vorgesehen sein.

Zur weiteren Führung und Verbindung des schwenkbaren Rahmenteils 59 mit dem Grund- und/oder Bespannungstragrahmen 6, 19 und zur Führung der Bespannung 10 in diesem Übergangsbereich ist zumindest ein in Richtung der Längserstreckung des Grundrahmens 6 und/ oder des Bespannungstragrahmens 19 teleskopierbar ausgerichtetes und teleskopierbares und/ oder elastisch verformbares Übergangselement 234 angeordnet.

Bevorzugt ist dieses Übergangselement 234 quer zur Längserstreckung elastisch verformbar. Als besonders vorteilhaft hat es sich erwiesen, wenn die elastische Verformbarkeit des Übertragungselements 234 nur für Verformungen in etwa senkrecht zum Sitzbereich 13 verlaufender Richtung vorgesehen ist, wogegen das Übergangselement 234 in quer zur Sitztiefe verlaufender Richtung biegesteif bzw. zumindest biegefest sein sollte.

Für die Ausbildung des Übergangselements 234 können beliebige aus dem Stand der Technik bekannte Mittel, wie beispielsweise elastisch verformbare Kunststoffelement, Bänder, Hebel usw. verwendet werden. Es ist aber auch möglich, das Übergangselement 234 durch einen Federstab zu bilden. Dieser Federstab kann beispielsweise aus einer Blattfeder bestehen oder aus einer Schraubenfeder oder verformbaren Schläuchen bzw. Rohren mit innenliegenden, elastisch verformbaren Elementen, gebildet sein, wie beispielsweise Federn. Bei Anordnung einer Blattfeder ist die Breitseite der Blattfeder in etwa parallel zum Sitzbereich 13 ausgerichtet. Damit kann sich die Blattfeder, wie insbesondere aus der Darstellung in Fig. 18 zu ersehen ist, bei der Bewegung des verschwenkbaren Rahmenteils 59 aus der in vollen Linien gezeichneten, eingeschwenkten Ruhestellung (in der nicht von einer Person benutzten Stellung) in die in strichlierten Linien gezeichnete ausgefahrene bzw. ausgeschwenkte Stellung, bei Benutzung durch einen Fluggast bzw. Fahrgast verformen. Dabei wird die Blattfeder aus der ursprünglich gekrümmten in eine nahezu gestreckte Lage umgeformt. Der Vorteil des elastisch verformbaren Übergangselements 234 bzw. der eines Federstabes liegt darin, dass die ausschließlich am Grundrahmen 6 oder Bespannungsrahmen 19 frei aufgehängte Bespannung 10 über diesen gelenkigen Übergangsbereich zwischen dem Grundrahmen 6 bzw. Bespannungstragrahmen 19 und dem verschwenkbaren Rahmenteil 59 geführt und lasttragend gehaltert wird.

Dabei kann es sich als vorteilhaft erweisen, diese Übergangselemente 234 bzw. Blattfedern und Schraubenfedern selbsttätig elastisch rückstellbar auszubilden.

Bevorzugt werden - wie insbesondere aus Fig. 18 zu ersehen ist - zwei derartige Federstäbe bzw. Übergangsteile 235, 236 vorgesehen, die in etwa in senkrecht zum Sitzbereich 13 verlaufender Richtung angeordnet sind. Damit kann auch bei sich verändernder Winkelstellung des Rahmenteils 59 zum Grundrahmen 6 bzw. Bespannungstragrahmen 19 eine einwandfreie schonende Führung der Bespannung 10 in diesem Bereich sichergestellt werden.

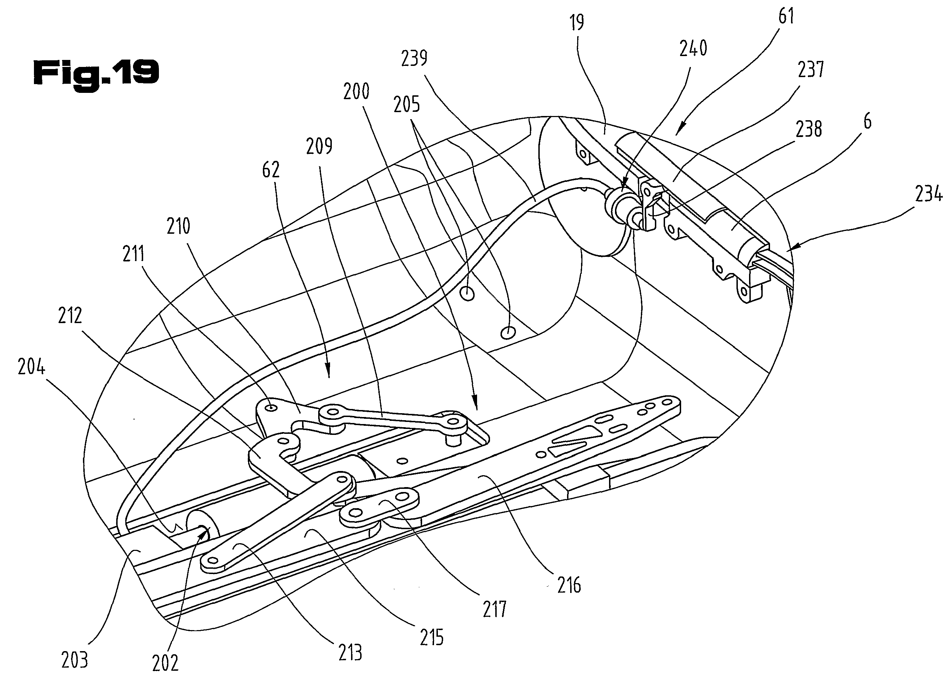

Wie besser aus Fig. 19 zu ersehen ist, ist im Verformungsbereich der Bespannung 10 zwischen dem Grundrahmen 6 bzw. Bespannungstragrahmen 19 und dem verschwenkbaren Rahmenteil 59 die Erfassungsvorrichtung 61 vorgesehen. Mit dieser Erfassungsvorrichtung 61 ist es möglich festzustellen, ob die Bespannung 10 sich in einer durch einen Benutzer belastenden Stellung oder in einer unbelasteten Stellung befindet.

Die Erfassungsvorrichtung 61 kann bevorzugt ein im Bereich des Grundrahmens 6 oder des Bespannungstragrahmens 19 angeordnetes relativ zu diesen bzw. dem Verkleidungselement 7 verstellbares Aktivierungselement 237 umfassen. Dieses kann zwischen dem Grundrahmen 6 und/oder dem Bespannungstragrahmen 19 bzw. dem Verkleidungselement 7 sowie der Benutzerseite 4 der Bespannung 10 angeordnet sein.

Wesentlich ist dabei, dass die Anordnung relativ zur Bespannung 10 derart erfolgt, dass bei einer Belastung der Bespannung 10 durch den Benutzer, eine im Wesentlichen schräg zum Verkleidungselement 7 gerichtete Druckkraft bzw. Stellkraft ausgeübt wird. So wäre es aber auch möglich, das Aktivierungselement 237 mit der Bespannung 10 direkt zu verbinden und die Verformung der Bespannung 10 gegenüber einem fixen Bezugspunkt als Auslösekraft zur Betätigung des Aktivierungselements 237 zu nutzen.

Im vorliegenden Ausführungsbeispiel ist das Aktivierungselement 237 in einer Ausnehmung des Grundrahmens 6 im Wesentlichen senkrecht zum Sitzbereich 13 verstellbar gelagert. Das Aktivierungselement 237 befindet sich dabei auf der den Armen eines Benutzers des Sitzes 1 zugewandten Oberseite des Grundrahmens 6 bzw. Bespannungstragrahmens 19. Das Aktivierungselement 237 ist seinerseits mit einem Winkelhebel 238 gelenkig verbunden, der bei einer Betätigung des Aktivierungselements 237, also der Ausübung einer Druckkraft in Richtung des Sitzbereiches 13, in Richtung der Sitztiefe verschwenkt wird. Der Winkelhebel 238 bildet mit einem Bowdenzug 239 ein Übertragungselement 240.

Dabei ist es auch möglich, dass das Übertragungselement 240 durch jegliche andere mechanische oder fluidtechnische Elemente bzw. elektrische Sensoren, Stellmotoren oder dgl. gebildet sein kann. Im vorliegenden Fall, bei einer rein mechanischen Übertragung der Aktivierungsbewegung des Aktivierungselements 237 hin zur Stellvorrichtung 62 der Betätigungseinrichtung 63 bzw. deren Arretiervorrichtung 203, ist der Winkelhebel 238 mit dem Bowdenzug 239 vorgesehen. Die Stellvorrichtung 62 bildet gemeinsam mit der Übertragungsvorrichtung 200 die Betätigungseinrichtung 63.

Der Steuerungsablauf für das selbsttätige Ausfahren des verschwenkbaren Rahmenteils 59 aus der in Fig. 18 in vollen Linien gezeichneten Ruhestellung in die in strichlierten Linien gezeichneten Benutzungsstellung, ist nun wie folgt.

Grundsätzlich wird beim Verlassen des Sitzes 1 bzw. beim Bereitstellen des Sitzes 1 für die nächste Benutzung der verschwenkbare Rahmenteil 59 durch den Benutzer selbst oder Servicepersonal in die in Fig. 18 in vollen Linien gezeichnete Ruhestellung abgeschwenkt. Damit wird bei Fahrzeugen mit geringem Abstand in Richtung der Sitztiefe zwischen den einzelnen Sitzreihen zusätzlicher Bewegungsraum für die Passagiere beim Verlassen ihrer Sitze 1, insbesondere bei Flugzeugen, erreicht.

Wird nun der Sitz 1 durch eine andere Person benutzt und belastet diese im Sitzbereich 13 die Bespannung 10, die sich elastisch rückstellbar an die Körperaußenform des Benutzers anpasst, wird eine Druckkraft auf der Aktivierungselement 237 ausgeübt, welche es dadurch relativ zum Grundrahmen 6 bzw. Bespannungstragrahmen 19 oder zum Verkleidungselement 7 verlagert. Diese Betätigung des Aktivierungselements 237 löst die Arretiervorrichtung 203 des Kraftspeichers 202, sodass sich der Kraftspeicher 202 verschiebt und die Übertragungsvorrichtung 200 aktiviert. Durch die Rückstellung des verschwenkbaren Rahmenteils 59 in die in Fig. 18 in vollen Linien gezeichnete Ruhestellung ist beispielsweise die Gasfeder entsprechend vorgespannt worden und wird durch Betätigung oder Entriegelung der Arretiervorrichtung 203 nunmehr über diese Stellkraft und durch Übersetzung über die Übertragungsvorrichtung 200 der verschwenkbare Rahmenteil 59 und in der Folge über die Parallelogrammhebelanordnung 201 aus der in Fig. 18 in vollen Linien gezeigten Ruhestellung in die in Fig. 18 in strichlierten Linien gezeigten Benutzerstellung selbsttätig hochgeschwenkt.

Damit steht die volle Sitzfläche für den Benutzer des Sitzes 1 während des Sitzens zur Verfügung und wird gleichzeitig der Vorteil erzielt, dass bei der Manipulation vor dem Niedersetzen bzw. Verlassen des Sitzes, ein größerer Bewegungsfreiraum für das Verstauen von Gepäckstücken unter den davor befindlichen Sitzen oder dgl. erreicht.

Weiters ist es von Vorteil, wenn zusätzlich zu der selbsttätigen Verstellung aus der in Fig. 18 in vollen Linien gezeigten Ruhestellung in die in strichlierten Linien gezeigten Benutzungsstellung auch eine Rückführung des verstellbaren Rahmenteils 59 möglich ist. Hierzu ist es möglich, mit entsprechend kraftbeaufschlagten Vorrichtungen durch die Verwendung von mit mechanischen Mitteln unter Druck gesetzten Fluid oder mittels elektrisch betätigter Stellvorrichtungen bei durch das Aktivierungselement 237 festgestellter Entlastung der Bespannung 10 ein automatisches Einfahren des verschwenkbaren Rahmenteils 59 in die Ruhestellung zu veranlassen. Dabei kann gleichzeitig der Kraftspeicher 202 vorgespannt werden, sodass bei der nächsten Benutzung ohne Zuführen von externer Energie eine Rückstellung des verschwenkbaren Rahmenteils 59 in die Benutzungsstellung erfolgen kann.

Der Ordnung halber sei abschließend darauf hingewiesen, dass zum besseren Verständnis des Aufbaus des Sitzes 1 dieser bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Sitz | 36 | Zone 4 |
| 2 | Traggestell | 37 | Zone 5 |
| 3 | Aufstandsfläche | 38 | Zone 6 |
| 4 | Benutzerseite | 39 | |
| 5 | Rückseite | 40 | |
| | | | |
| 6 | Grundrahmen | 41 | Längsrandbereich |
| 7 | Verkleidungselement | 42 | Randabschnitt |
| 8 | Stützeinheit | 43 | Randabschnitt |
| 9 | Stützfläche | 44 | Faden |
| 10 | Bespannung | 45 | Faden |
| | | | |
| 11 | Gestrick | 46 | Faden |
| 12 | Rückenbereich | 47 | Faden |
| 13 | Sitzbereich | 48 | Anstellwinkel |
| 14 | Winkel | 49 | Aufnahmeseite |
| 15 | Vertikale | 50 | Stützelement |
| | | | |
| 16 | Winkel | 51 | Innenfläche |
| 17 | Gesäßbereich | 52 | Zwischenlage |
| 18 | Oberschenkelbereich | 53 | Stützgurt |
| 19 | Bespannungstragrahmen | 54 | Leuchtmittel |
| 20 | Armlehne | 55 | Vertiefung |
| | | | |
| 21 | Kopfstütze | 56 | Breite |
| 22 | Anzeigeelement | 57 | Stützabschnitt |
| 23 | Tisch | 58 | Gelenkanordnung |
| 24 | Aufnahmeelement | 59 | Rahmenteil |
| 25 | Halteelement | 60 | Breite |
| | | | |
| 26 | Oberfläche | 61 | Erfassungsvorrichtung |
| 27 | Vertiefung | 62 | Stellvorrichtung |
| 28 | Rückenlehne | 63 | Betätigungseinrichtung |
| 29 | Schulterbereich | 64 | Ausnehmung |
| 30 | Kopfbereich | 65 | Verstellvorrichtung |
| | | | |
| 31 | Winkel | 66 | Zentralteil |
| 32 | Körperkontur | 67 | Seitenteil |
| 33 | Zone 1 | 68 | Seitenteil |
| 34 | Zone 2 | 69 | Polsterung |
| 35 | Zone 3 | 70 | Schwenkachse |
| 71 | Schwenkachse | 221 | Langloch |
| 72 | Gelenkanordnung | 222 | Lagerbock |
| 73 | Gelenkanordnung | 223 | Verbindungshebel |
| 74 | Tragelement | 224 | Winkelhebel |
| 75 | Tragelement | 225 | Knickbereich |
| | | | |
| 76 | Tragelement | 226 | Schenkel |
| 77 | Traganordnung | 227 | Schenkel |
| 78 | Kupplungselement | 228 | Schwenkachse |
| 79 | Gelenkanordnung | 229 | Drehachse |
| 80 | Schwenkachse | 230 | Parallelogrammhebel |
| | | | |
| 81 | Führungsanordnung | 231 | Gelenkachse |
| 82 | Tischfläche | 232 | Parallelogrammhebel |
| 83 | Aufnahmefach | 233 | Drehachse |
| 84 | Stirnseite | 234 | Übergangselement |
| 85 | Fachwand | 235 | Übergangsteil |
| | | | |
| 86 | Winkel | 236 | Übergangsteil |
| 87 | Beleuchtungsmittel | 237 | Aktivierungselement |
| | | 238 | Winkelhebel |
| 200 | Übertragungsvorrichtung | 239 | Bowdenzug |
| 201 | Parallelogrammhebelanordnung | 240 | Übertragungselement |
| 202 | Kraftspeicher | | |
| 203 | Arretiervorrichtung | | |
| 204 | Vertiefung | | |
| 205 | Befestigungsmittel | | |
| | | | |
| 206 | Zentralträger | | |
| 207 | Mehrhebelanordnung | | |
| 208 | Zylinder | | |
| 209 | Steuerarm | | |
| 210 | Kniehebel | | |
| | | | |
| 211 | Gelenkachse | | |
| 212 | Umlenkhebel | | |
| 213 | Steuerhebel | | |
| 214 | Steuerhebel | | |
| 215 | Schwenkarm | | |
| | | | |
| 216 | Schwenkarm | | |
| 217 | Fixlager | | |
| 218 | Endbereich | | |
| 219 | Gleitschuh | | |
| 220 | Führungsbahn | | |

## Patentansprüche

1. Sitz (1), insbesondere für öffentliche Verkehrsmittel, mit einem Traggestell (2) und einer damit verbundenen Stützeinheit (8), welche einen Grundrahmen (6) sowie eine daran gehalterte elastische Bespannung (10) umfasst und diese als freitragende Konstruktion aus einem Gestrick (11) gebildet ist
und die Bespannung (10) eine Stützfläche (9) mit einem Sitzbereich (13) sowie einem Rückenbereich (12) ausbildet, wobei
die Bespannung (10) durchlaufend zwischen dem Sitzbereich (13) und dem Rückenbereich (12) ausgebildet ist
und die Stützfläche (9) der Bespannung (10) in deren Längserstreckung mehrere hintereinander angeordnete Zonen (33 bis 38) aufweist, von denen zumindest eine Zone (34) eine größere elastische Verformbarkeit bezüglich der weiteren Zonen (33, 35, 36, 37, 38) aufweist,
**dadurch gekennzeichnet, dass**
die Zone (34) mit der größten elastischen Verformbarkeit zwischen dem Sitzbereich (13) und dem Rückenbereich (12) ausgebildet ist und
dass in einem Längsrandbereich (41) des Gestricks (11) beidseits der den Sitzbereich (13) bildenden Zone (35) jeweils ein weiterer streifenförmiger Randabschnitt (43) der Zone (34) mit der größten elastischen Verformbarkeit angeordnet ist.

2. Sitz (1) nach Anspruch 1, **dadurch gekennzeichnet, dass** die Zone (34) mit der größten elastischen Verformbarkeit eine Elastizität nach DIN EN 14704-1 in einem Bereich mit einer unteren Grenze von 10 N und einer oberen Grenze von 40 N, bevorzugt 22 N, bei einer Dehnlänge von 100% aufweist.

3. Sitz (1) nach einem der vorhergehenden Ansprüche, **dadurch gekennzeichnet, dass** die den Rückenbereich (12) bildende Zone (33) eine Festigkeit im Streifenzugversuch nach DIN EN 13934-1 in einem Bereich mit einer unteren Grenze von 700 N und einer oberen Grenze von 1400 N, bevorzugt von 1080 N, aufweist.

4. Sitz (1) nach einem der vorhergehenden Ansprüche, **dadurch gekennzeichnet, dass** in einem Längsrandbereich (41) des Gestricks (11) beidseits der Zone (34) mit der größten elastischen Verformbarkeit jeweils ein streifenförmiger Randabschnitt (42) der Zone (33) des Rückenbereiches (12) angeordnet ist.

5. Sitz (1) nach einem der vorhergehenden Ansprüche, **dadurch gekennzeichnet, dass** jeweils ein Übergang zwischen dem streifenförmigen Randabschnitt (42) und dem dazu quer verlaufenden Zonenende der Zone (34) mit der größten elastischen Verformbarkeit bogenförmig verlaufend ausgebildet ist.

6. Sitz (1) nach einem der vorhergehenden Ansprüche, **dadurch gekennzeichnet, dass** die den Sitzbereich (13), insbesondere die Sitzfläche bildende Zone (35) eine Festigkeit im Streifenzugversuch nach DIN EN 13934-1 in einem Bereich mit einer unteren Grenze von 800 N und einer oberen Grenze von 1500 N, bevorzugt von 1170 N, aufweist.

7. Sitz (1) nach Anspruch 1, **dadurch gekennzeichnet, dass** jeweils ein Übergang zwischen dem weiteren streifenförmigen Randabschnitt (43) und dem dazu quer verlaufenden Zonenende der den Sitzbereich (13) bildenden Zone (35) bogenförmig verlaufend ausgebildet ist.

8. Sitz (1) nach einem der vorhergehenden Ansprüche, **dadurch gekennzeichnet, dass** die Stützeinheit (8) zumindest einen Grundrahmen (6) sowie ein diesen aufnehmendes Verkleidungselement (7) umfasst.

9. Sitz (1) nach Anspruch 8, **dadurch gekennzeichnet, dass** das Verkleidungselement (7) zwischen dem Rückenbereich (12), insbesondere einer Rückenlehne (28) und dem Sitzbereich (13) einen feststehenden Winkel (14) definiert.

10. Sitz (1) nach einem der vorhergehenden Ansprüche, **dadurch gekennzeichnet, dass** im unbenutzten Zustand der Sitzbereich (13) bezüglich einer Aufstandsfläche (3) für den Sitz (1) ansteigend hin zum Rückenbereich (12) verlaufend ausgebildet ist.

11. Sitz (1) nach einem der vorhergehenden Ansprüche, **dadurch gekennzeichnet, dass** im benutzten Zustand der Sitzbereich (13) bezüglich der Aufstandsfläche (3) für den Sitz (1) abfallend hin zum Rückenbereich (12) verlaufend ausgebildet ist.

12. Sitz (1) nach Anspruch 1, **dadurch gekennzeichnet, dass** die Bespannung (10) am Grundrahmen (6) aufgespannt ist.

13. Sitz (1) nach Anspruch 8, **dadurch gekennzeichnet, dass** der Grundrahmen (6) lösbar mit dem Verkleidungselement (7) verbunden ist.

14. Sitz (1) nach Anspruch 8, **dadurch gekennzeichnet, dass** das Verkleidungselement (7) und der Grundrahmen (6) miteinander verbunden sind und die Bespannung (10) auf einem eigenen Bespannungstragrahmen (19) aufgespannt ist und dieser lösbar mit der Stützeinheit (8) aus dem Verkleidungselement (7) und dem Grundrahmen (6) verbunden ist.

15. Sitz (1) nach Anspruch 8, **dadurch gekennzeichnet, dass** an einer dem Benutzer zugewendeten Innenfläche (51) des Verkleidungselements (7) zumindest eine Zwischenlage (52) angeordnet ist und dass die Zwischenlage (52) aus einem insbesondere flammhemmend ausgebildeten Kunststoffschaum gebildet ist.

16. Sitz (1) nach Anspruch 8, **dadurch gekennzeichnet, dass** zwischen der Bespannung (10) und der Innenfläche (51) des Verkleidungselements (7) zumindest ein quer zur Längserstreckung der Bespannung (10) ausgerichteter Stützgurt (53) vorgesehen ist.

17. Sitz (1) nach einem der vorhergehenden Ansprüche, **dadurch gekennzeichnet, dass** ein dem Kniekehlenbereich des Benutzers zuwendbarer Stützabschnitt (57) der Bespannung (10) verschwenkbar bezüglich der Stützeinheit (8) ausgebildet ist.

18. Sitz (1) nach Anspruch 17, **dadurch gekennzeichnet, dass** der Stützabschnitt (57) durch einen bezüglich der Stützeinheit (8) verschwenkbaren Rahmenteil (59) des Grundrahmens (6) und/oder Bespannungstragrahmen (19) gebildet ist.

19. Sitz (1) nach Anspruch 18, **dadurch gekennzeichnet, dass** dem Rahmenteil (59) eine Betätigungseinrichtung (63) zugeordnet ist, mit welcher dieser zwischen seiner Bereitschaftsstellung und Gebrauchsstellung verstellbar ist und dass die Betätigungseinrichtung (63) eine dem Sitzbereich (13) zugeordnete Erfassungsvorrichtung (61) sowie eine damit in Leitungsverbindung stehende Stellvorrichtung (62) umfasst und die Stellvorrichtung (62) mit dem Rahmenteil (59) wirkverbunden ist.

20. Sitz (1) nach einem der vorhergehenden Ansprüche, **dadurch gekennzeichnet, dass** an der Stützeinheit (8) in einem Kopfbereich (30) der Bespannung (10) eine Kopfstütze (21) gehaltert ist, welche der Bespannung (10) vorgeordnet ist und dass die Kopfstütze (21) einen Zentralteil (66) sowie beidseits daran angeordnete und über Schwenkachsen (70, 71) verstellbare Seitenteile (67, 68) umfasst.

## Claims

1. A seat (1), particularly for public transportation, having a carrying frame (2) and a support unit (8) connected thereto, said support unit (8) having a base frame (6) and an elastic cover (10) held thereon and said elastic cover (10) is formed as a self-supporting structure of a knitted fabric (11)
and the cover (10) forms a support surface (9) having a seat region (13) and a back region (12), wherein
the cover (10) is configured to be continuous between the seat region (13) and the back region (12)
and the support surface (9) of the cover (10) has a plurality of zones (33 to 38) located consecutively in the longitudinal direction of said cover (10), of which at least one zone (34) has a greater elastic deformability relative to the other zones (33, 35, 36, 37, 38),
**characterized in that**
the zone (34) having the greatest elastic deformability is formed between the seat region (13) and the back region (12) and
that a further strip-shaped edge section (43) of the zone (34) having the greatest elastic deformability is disposed in each case in a longitudinal edge region (41) of the knitted fabric (11) on both sides of the zone (35) forming the seat region (13).

2. The seat (1) according to claim 1, **characterized in that** the zone (34) having the greatest elastic deformability has an elasticity according to DIN EN 14704-1 in a range having a lower limit of 10 N and an upper limit of 40 N, preferably 22 N, with a linear strain of 100%.

3. The seat (1) according to one of the preceding claims, **characterized in that** the zone (33) forming the back region (12) has a strength in the strip tensile test according to DIN EN 13934-1 in a range having a lower limit of 700 N and an upper limit of 1400 N, preferably of 1080 N.

4. The seat (1) according to one of the preceding claims, **characterized in that** a strip-shaped edge section (42) of the zone (33) of the back region (12) is disposed in each case in a longitudinal edge region (41) of the knitted fabric (11) on both sides of the zone (34) having the greatest elastic deformability.

5. The seat (1) according to one of the preceding claims, **characterized in that** in each case a transition between the strip-shaped edge section (42) and the zone end of the zone (34) having the greatest elastic deformability, running transversely thereto, is configured to run in an arcuate shape.

6. The seat (1) according to one of the preceding claims, **characterized in that** the zone (35) forming the seat region (13), in particular the seat surface, has a strength in the strip tensile test according to DIN EN 13934-1 in a range having a lower limit of 800 N and an upper limit of 1500 N, preferably of 1170 N.

7. The seat (1) according to claim 1, **characterized in that** in each case a transition between the further strip-shaped edge section (43) and the zone end of the zone (35) forming the seat region (13), running transversely thereto, is configured to run in an arcuate shape.

8. The seat (1) according to one of the preceding claims, **characterized in that** the support unit (8) comprises at least one base frame (6) and a cladding element (7) which receives said base frame (6).

9. The seat (1) according to claim 8, **characterized in that** the cladding element (7) defines a fixed angle (14) between the back region (12), in particular a back rest (28) and the seat region (13).

10. The seat (1) according to one of the preceding claims, **characterized in that** in the unused state the seat region (13) is configured to run ascendingly towards the back region (12) with regard to a standing surface (3) for the seat (1).

11. The seat (1) according to one of the preceding claims, **characterized in that** in the used state the seat region (13) is configured to run descendingly towards the back region (12) with regard to the standing surface (3) for the seat (1).

12. The seat (1) according to claim 1, **characterized in that** the cover (10) is spanned on the base frame (6).

13. The seat (1) according to claim 8, **characterized in that** the base frame (6) is detachably connected to the cladding element (7).

14. The seat (1) according to claim 8, **characterized in that** the cladding element (7) and the base frame (6) are connected to one another and the cover (10) is spanned on its own cover carrying frame (19) and said frame is detachably connected to the support unit (8) comprising the cladding element (7) and the base frame (6).

15. The seat (1) according to claim 8, **characterized in that** at least one intermediate layer (52) is disposed on an inner surface (51) of the cladding element (7) facing the user, and that the intermediate layer (52) is formed from a plastic foam which is in particular configured to be flame-retardant.

16. The seat (1) according to claim 8, **characterized in that** at least one support belt (53) aligned transversely to the longitudinal extension of the cover (10) is provided between the cover (10) and the inner surface (51) of the cladding element (7).

17. The seat (1) according to any one of the preceding claims, **characterized in that** a support section (57) of the cover (10) which can face the back-of-the-knee region of the user is configured to be pivotable with respect to the support unit (8).

18. The seat (1) according to claim 17, **characterized in that** the support section (57) is formed by a frame part (59) of the base frame (6) and/or cover carrying frame (19) which is pivotable with respect to the support unit (8).

19. The seat (1) according to claim 18, **characterized in that** an actuating device (63) is associated with the frame part (59) by which means said frame part (59) is adjustable between its readiness position and usage position, and that the actuating device (63) comprises a detection device (61) associated with the seat region (13) and an adjusting device (62) in line connection therewith and the adjusting device (62) is operatively connected to the frame part (59).

20. The seat (1) according to one of the preceding claims, **characterized in that** a headrest (21) located in front of the cover (10) is held on the support unit (8) in a head region (30) of the cover (10), and that the headrest (21) comprises a central part (66) and side parts (67, 68) which are disposed on both sides thereon and are adjustable by means of pivot axes (70, 71).

## Revendications

1. Siège (1), plus particulièrement pour des moyens de transport en commun, avec un châssis de support (2) et une unité d'appui (8) reliée avec celui-ci, qui comprend un cadre de base (6) ainsi qu'un entoilage (10) maintenu de manière élastique sur celui-ci et celui-ci est réalisé sous la forme d'une construction autoporteuse à partir d'un tricot (11),
et l'entoilage (10) forme une surface d'appui (9) avec une partie d'assise (13) ainsi qu'une partie de dossier (12),
l'entoilage (10) étant conçu de manière continue entre la partie d'assise (13) et la partie de dossier (12),
et la surface d'appui (9) de l'entoilage (10) comprend, dans son extension longitudinale, plusieurs zones (33 à 38) disposées les unes après les autres, dont au moins une zone (34) présente une déformabilité élastique supérieure par rapport aux autres zones (33, 35, 36, 37, 38),
**caractérisé en ce que**
la zone (34) avec la déformabilité élastique la plus importante est disposée entre la partie d'assise (13) et la partie de dossier (12) et
**en ce que**, dans la partie de bord longitudinale (41) du tricot (11), des deux côtés de la zone (35) formant la partie d'assise (13), se trouve une portion de bord en forme de bande (43) supplémentaire de la zone (34) avec la déformabilité élastique la plus importante.

2. Siège (1) selon la revendication 1, **caractérisé en ce que** la zone (34) avec la déformabilité élastique la plus importante présente une élasticité selon DIN EN 14704-1 dans une partie avec une limite inférieure de 10 N et une limite supérieure de 40 N, de préférence 22 N, pour une longueur de dilatation de 100%.

3. Siège (1) selon l'une des revendications précédentes, **caractérisé en ce que** la zone (33) formant la partie de dossier (12) présente une résistance lors d'un essai de traction selon DIN EN 13934-1 dans une partie avec une limite inférieure de 700 N et une limite supérieure de 1400 N, de préférence de 1080 N.

4. Siège (1) selon l'une des revendications précédentes, **caractérisé en ce que**, dans une partie de bord longitudinale (41) du tricot (11), des deux côtés de la zone (34) avec la déformabilité élastique la plus importante, se trouve une portion de bord en forme de bande (42) de la zone (33) de la partie de dossier (12).

5. Siège (1) selon l'une des revendications précédentes, **caractérisé en ce qu'**une transition entre la portion de bord en forme de bande (42) et l'extrémité de la zone (34) avec la déformabilité élastique la plus importante, s'étendant transversalement par rapport à celle-ci, est conçue avec une extension en forme d'arc de cercle.

6. Siège (1) selon l'une des revendications précédentes, **caractérisé en ce que** la zone formant la partie d'assise (13), plus particulièrement la zone (35) formant la surface d'assise, présente une résistance à la traction selon DIN EN 13934-1 dans une partie avec une limite inférieure de 800 N et une limite supérieure de 1500 N, de préférence de 1170 N.

7. Siège (1) selon la revendication 1, **caractérisé en ce qu'**une transition entre la portion de bord en forme de bande (43) supplémentaire et l'extrémité, s'étendant transversalement par rapport à celle-ci, de la zone (35) formant la partie d'assise (13) est conçue avec une extension en forme d'arc de cercle.

8. Siège (1) selon l'une des revendications précédentes, **caractérisé en ce que** l'unité d'appui (8) comprend au moins un cadre de base (6) ainsi qu'un élément d'habillage (7) logeant celui-ci.

9. Siège (1) selon la revendication 8, **caractérisé en ce que** l'élément d'habillage (7) définit, entre la partie de dossier (12), plus particulièrement un dossier (28), et la partie d'assise (13), un angle fixe (14).

10. Siège (1) selon l'une des revendications précédentes, **caractérisé en ce que**, lorsque la partie d'assise (13) n'est pas utilisée, elle est disposée de façon à s'étendre en montée en direction de la partie de dossier (12) par rapport à une surface de contact (3) pour le siège (1).

11. Siège (1) selon l'une des revendications précédentes, **caractérisé en ce que**, lorsque la partie d'assise (13) est utilisée, elle est disposée de façon à s'étendre en descente en direction de la partie de dossier (12) par rapport à la surface de contact (3) pour le siège (1).

12. Siège (1) selon la revendication 1, **caractérisé en ce que** l'entoilage (10) est tendu sur le cadre de base (6).

13. Siège (1) selon la revendication 8, **caractérisé en ce que** le cadre de base (6) est relié de manière amovible avec l'élément d'habillage (7).

14. Siège (1) selon la revendication 8, **caractérisé en ce que** l'élément d'habillage (7) et le cadre de base (6) sont reliés entre eux et l'entoilage (10) est tendu sur un cadre de support d'entoilage (19) et celui-ci est relié de manière amovible avec l'unité d'appui (8) constituée de l'élément d'habillage (7) et du cadre de base (6).

15. Siège (1) selon la revendication 8, **caractérisé en ce que**, au niveau d'une surface interne (51) de l'élément d'habillage (7), orientée vers l'utilisateur, se trouve au moins une couche intermédiaire (52) et **en ce que** la couche intermédiaire (52) est constituée d'une mousse de matière plastique ignifugée.

16. Siège (1) selon la revendication 8, **caractérisé en ce que**, entre l'entoilage (10) et la surface interne (51) de l'élément d'habillage (7) se trouve au moins une sangle d'appui (53) orientée transversalement par rapport à l'extension longitudinale de l'entoilage (10).

17. Siège (1) selon l'une des revendications précédentes, **caractérisé en ce qu'**une portion d'appui (57) de l'entoilage (10), qui peut être orientée vers le pli des genoux de l'utilisateur, est conçu de manière pivotante par rapport à l'unité d'appui (8).

18. Siège (1) selon la revendication 17, **caractérisé en ce que** la portion d'appui (57) est constituée d'une partie (59) du cadre de base (6) et/ou du cadre de support d'entoilage (19), pivotante par rapport à l'unité d'appui (8).

19. Siège (1) selon la revendication 18, **caractérisé en ce que** la partie de cadre (59) comprend un dispositif d'actionnement (63) avec lequel celui-ci peut être déplacé entre sa position d'attente et une position d'utilisation et **en ce que** le dispositif d'actionnement (63) comprend un dispositif de détection (61) correspondant à la partie d'assise (13) ainsi qu'un dispositif de réglage (62) en liaison conductrice avec celui-ci et le dispositif de réglage (62) est relié de manière fonctionnelle avec la partie de cadre (59).

20. Siège (1) selon l'une des revendications précédentes, **caractérisé en ce que**, au niveau de l'unité d'appui (8), un appuie-tête (21) est maintenu dans une partie de tête (30) de l'entoilage (10), qui est disposé avant l'entoilage (10) et **en ce que** l'appuie-tête (21) comprend une partie centrale (66) ainsi que des parties latérales (67, 68) disposées des deux côtés et réglables par l'intermédiaire d'axes de pivotement (70, 71).
